(19) Europäisches Patentamt
European Patent Office
Office européen des brevets

(11) EP 4 797 546 A1

(12) # EUROPEAN PATENT APPLICATION
published in accordance with Art. 153(4) EPC

(43) Date of publication:
**26.08.2026 Bulletin 2026/35**

(21) Application number: **24888982.6**

(22) Date of filing: **23.10.2024**

(51) International Patent Classification (IPC):
***H04B 1/3827*** *(2015.01)* ***H04W 52/28*** *(2009.01)*
***H04W 52/36*** *(2009.01)* ***H04W 52/24*** *(2009.01)*

(52) Cooperative Patent Classification (CPC):
**H04B 1/3827; H04W 52/24; H04W 52/28; H04W 52/36**

(86) International application number:
**PCT/KR2024/016175**

(87) International publication number:
**WO 2025/100792 (15.05.2025 Gazette 2025/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.11.2023 KR 20230151613**
**07.12.2023 KR 20230177086**
**26.02.2024 KR 20240027540**

(71) Applicant: **Samsung Electronics Co., Ltd.**
**Suwon-si, Gyeonggi-do 16677 (KR)**

(72) Inventors:
- **SHIN, Seunghun**
**Suwon-si Gyeonggi-do 16677 (KR)**
- **CHOI, Wonjin**
**Suwon-si Gyeonggi-do 16677 (KR)**
- **KIM, Hoonshik**
**Suwon-si Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

(54) **ELECTRONIC DEVICE FOR TRANSMITTING RF SIGNAL, OPERATING METHOD THEREOF, AND STORAGE MEDIUM**

(57) An electronic device according to one embodiment may comprise one or more processors. The electronic device may comprise a memory for storing instructions. When executed individually or collectively by the one or more processors, the one or more instructions can cause the electronic device to detect a designated event associated with the proximity or the grip of a user. When executed individually or collectively by the one or more processors, the one or more instructions can cause the electronic device to, if a call is not activated through a receiver of the electronic device, control, on the basis of the detection of the designated event, the transmission power of an RF signal by repeatedly changing the value of a maximum transmission power level (MTPL) between a first maximum value and a first minimum value so that an average value of the transmission power of the RF signal is less than or equal to a designated threshold value during the predetermined time period. When executed individually or collectively by the one or more processors, the one or more instructions can cause the electronic device to, if a call is activated through the receiver of the electronic device, control, during the call using the receiver, the transmission power of the RF signal by repeatedly changing the value of the MTPL between a second maximum value, which is less than the first maximum value, and a second minimum value so that the average value of the transmission power of the RF signal is less than or equal to the designated threshold value during the predetermined time period. The first maximum value and the second maximum value can be greater than the designated threshold value, and the first minimum value and the second minimum value can be less than the designated threshold value. Other various embodiments are possible.

EP 4 797 546 A1

START
IDENTIFY DESIGNATED EVENT
801
BASED ON CALL THROUGH RECEIVER NOT BEING ACTIVATED, CONTROL TRANSMISSION POWER OF RF SIGNAL BY REPEATEDLY CHANGING MTPL BETWEEN FIRST MAXIMUM VALUE AND FIRST MINIMUM VALUE
803
BASED ON CALL THROUGH RECEIVER BEING ACTIVATED, CONTROL TRANSMISSION POWER OF RF SIGNAL BY REPEATEDLY CHANGING MTPL BETWEEN SECOND MAXIMUM VALUE AND SECOND MINIMUM VALUE
805
END

FIG. 8A

## Description

[Technical Field]

The disclosure relates to an electronic device for transmitting an RF signal, a method of operating the same, and a storage medium.

[Background Art]

An electronic device may transmit a plurality of types of RF signals. For example, a physical channel for an RF signal may include at least one of a physical uplink shared channel (PUSCH), a physical uplink control channel (PUCCH), a physical random access channel (PRACH), or a sounding reference signal (SRS). The electronic device may transmit an RF signal of a PUSCH, an RF signal of a PUCCH, an RF signal of a PRACH, and SRS by using a resource allocated for each uplink channel.

In addition, the transmission power for each uplink physical channel may be configured to be different. Accordingly, as RF signals respectively corresponding to the uplink physical channels are transmitted, the transmission power of the RF signals may be changed. The electronic device may include at least one power amplifier for amplifying an RF signal. Based on the transmission power of RF signals, a mode for controlling a supply voltage (Vcc) applied to the power amplifier includes an envelope tracking (ET) mode or an average power tracking (APT) mode. In the APT mode, the supply voltage may be controlled based on the transmission power of an RF signal, and the supply voltage may be controlled in units of time of a slot (or a subframe). In the ET mode, the supply voltage may be controlled by tracking the transmission power of an RF signal in real time.

The above description may be provided as related art for the purpose of facilitating understanding of the related art. None of the above may be claimed as prior art related to the disclosure, nor may it be used to determine prior art.

[Detailed Description of the Invention]

[Technical Problem]

[Technical Solution]

According to an embodiment, an electronic device may include one or more processors. The electronic device may include memory configured to store instructions. The one or more instructions, when executed individually or collectively by the at least one processor, may cause the electronic device to detect a designated event associated with proximity or grip of a user. The one or more instructions, when executed by the at least one processor individually or collectively, may cause the electronic device to, in case that a call is not activated through a receiver of the electronic device, control transmission power of an RF signal based on detection of the designated event by repeatedly changing a value of a maximum transmission power level (MTPL) between a first maximum value and a first minimum value such that an average value of transmission power of the RF signal during a predetermined time interval is less than or equal to a designated threshold value. The one or more instructions, when executed individually or collectively by the at least one processor, may cause the electronic device to, in case that the call is activated through the receiver of the electronic device, control transmission power of an RF signal during a call through the receiver by repeatedly changing a value of the MTPL between a second maximum value smaller than the first maximum value and a second minimum value such that an average value of the transmission power of the RF signal during the predetermined time interval is less than or equal to the designated threshold value. The first maximum value and the second maximum value may be greater than the designated threshold value, and the first minimum value and the second minimum value may be smaller than the designated threshold value.

According to an embodiment, in a computer-readable storage medium storing instructions, the instructions, when executed by a processor of an electronic device, may cause the electronic device to perform at least one operation. The at least one operation may include detecting a designated event associated with proximity or grip of a user. The at least one operation may include, when a call is not activated through a receiver of the electronic device, controlling transmission power of an RF signal based on detection of the designated event by repeatedly changing a value of a maximum transmission power level (MTPL) between a first maximum value and a first minimum value such that an average value of transmission power of the RF signal during a predetermined time interval is less than or equal to a designated threshold value. The at least one operation may include, when the call is activated through the receiver of the electronic device, controlling transmission power of an RF signal during a call through the receiver by repeatedly changing a value of the MTPL between a second maximum value smaller than the first maximum value and a second minimum value such that an average value of the transmission power of the RF signal during the predetermined time interval is less than or equal to the

designated threshold value. The first maximum value and the second maximum value may be greater than the designated threshold value, and the first minimum value and the second minimum value may be smaller than the designated threshold value.

According to an embodiment, a method of operating an electronic device may include detecting a designated event associated with proximity or grip of a user. The method of operating the electronic device may include, when a call is not activated through a receiver of the electronic device, controlling transmission power of an RF signal based on detection of the designated event by repeatedly changing a value of a maximum transmission power level (MTPL) between a first maximum value and a first minimum value such that an average value of transmission power of the RF signal during a predetermined time interval is less than or equal to a designated threshold value. The method of operating the electronic device may include, when the call is activated through the receiver of the electronic device, controlling transmission power of an RF signal during a call through the receiver by repeatedly changing a value of the MTPL between a second maximum value smaller than the first maximum value and a second minimum value such that an average value of the transmission power of the RF signal during the predetermined time interval is less than or equal to the designated threshold value. The first maximum value and the second maximum value may be greater than the designated threshold value, and the first minimum value and the second minimum value may be smaller than the designated threshold value.

According to an embodiment, an electronic device may include one or more processors. The electronic device may include memory configured to store instructions. The one or more instructions, when executed individually or collectively by the at least one processor, may cause the electronic device to identify whether a first condition indicating that a call is being performed by the electronic device is satisfied. The one or more instructions, when executed individually or collectively by the at least one processor, may cause the electronic device to identify whether a second condition indicating satisfaction of a back-off condition for MTPL is satisfied. The one or more instructions, when executed individually or collectively by the at least one processor, may cause the electronic device to configure a value of the MTPL based on whether the first condition is satisfied and whether the second condition is satisfied.

According to an embodiment, in a computer-readable storage medium storing instructions, the instructions, when executed by a processor of an electronic device, may cause the electronic device to perform at least one operation. The at least one operation may include identifying whether a first condition indicating that a call is being performed by the electronic device is satisfied. The at least one operation may include identifying whether a second condition indicating satisfaction of a back-off condition for MTPL is satisfied. The at least one operation may include configuring a value of the MTPL based on whether the first condition is satisfied and whether the second condition is satisfied.

According to an embodiment, a method of operating an electronic device may include identifying whether a first condition indicating that a call is being performed by the electronic device is satisfied. The method of operating the electronic device may include identifying whether a second condition indicating satisfaction of a back-off condition for MTPL is satisfied. The method of operating the electronic device may include setting a value of the MTPL based on whether the first condition is satisfied and whether the second condition is satisfied.

[Advantageous Effects]

[Brief Description of Drawings]

FIG. 1 is a block diagram of an electronic device in a network environment according to various embodiments.
FIG. 2A is a block diagram of an electronic device for supporting legacy network communication and 5G network communication according to various embodiments.
FIG. 2B is a block diagram of an electronic device for supporting legacy network communication and 5G network communication according to various embodiments.
FIG. 3A is a block diagram of an electronic device including a power amplifier according to various embodiments.
FIG. 3B is a block diagram of an electronic device including a power amplifier according to various embodiments.
FIGS. 4A to 4C each illustrate an operation mode of a modulator according to various embodiments.
FIG. 5A illustrates a graph of a voltage applied to a capacitor connected to a power amplifier according to various embodiments.
FIG. 5B illustrates a cross-sectional view of a capacitor during charging and discharging according to various embodiments.
FIG. 6A is a flowchart illustrating a method of operating an electronic device according to various embodiments.
FIG. 6B illustrates a maximum level of transmission power over time according to various embodiments.
FIG. 6C illustrates transmission power over time according to various embodiments.
FIG. 6D illustrates back-off according to an embodiment.
FIGS. 7A to 7C each illustrate a graph of transmission power over time according to various embodiments.

FIGS. 7D and 7E each illustrate a table of transmission power over time according to various embodiments.
FIG. 8A is a flowchart illustrating a method of operating an electronic device according to an embodiment.
FIG. 8B illustrates a maximum level of transmission power according to an embodiment.
FIG. 8C illustrates a driving voltage applied to a capacitor according to an embodiment.
FIG. 8D is a flowchart illustrating a method of operating an electronic device according to an embodiment.
FIG. 8E is a flowchart illustrating a method of operating an electronic device according to an embodiment.
FIG. 8F illustrates comparison between a back-off period of transmission power while a call is not in progress and a back-off period during a call according to an embodiment.
FIG. 9 is a flowchart illustrating a method of operating an electronic device according to an embodiment.
FIG. 10 is a flowchart illustrating a method of operating an electronic device according to an embodiment.
FIG. 11 is a flowchart illustrating a method of operating an electronic device according to an embodiment.
FIG. 12 is a flowchart illustrating a method of operating an electronic device according to an embodiment.
FIG. 13 is a flowchart illustrating a method of operating an electronic device according to an embodiment.
FIG. 14 is a flowchart illustrating a method of operating an electronic device according to an embodiment.
FIG. 15 illustrates antenna hopping according to an embodiment.
FIG. 16A is a flowchart illustrating a method of operating an electronic device according to an embodiment.
FIG. 16B illustrates a maximum level of transmission power according to an embodiment.
FIG. 17A is a flowchart illustrating a method of operating an electronic device according to an embodiment.
FIG. 17B is a diagram showing a maximum level of transmission power according to an embodiment.
FIG. 18 illustrates a process of identifying an RNDC according to an embodiment.

[Mode for Carrying out the Invention]

Hereinafter, embodiments of the disclosure will be described in detail with reference to the accompanying drawings so that a person having ordinary skill in the art to which the disclosure pertains may easily carry out the disclosure. However, the disclosure may be implemented in various different forms and is not limited to the embodiments described herein. In connection with the description of the drawings, the same or similar reference numerals may be used for the same or similar components. In addition, in the drawings and the related description, descriptions of well-known functions and configurations may be omitted for the sake of clarity and conciseness.

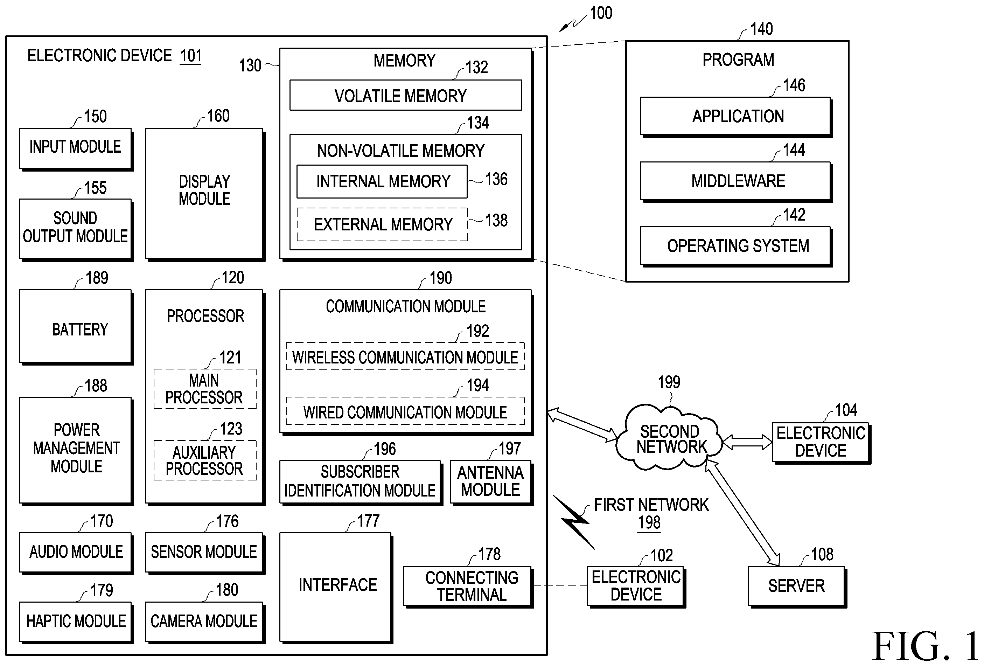

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state,

or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a

service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

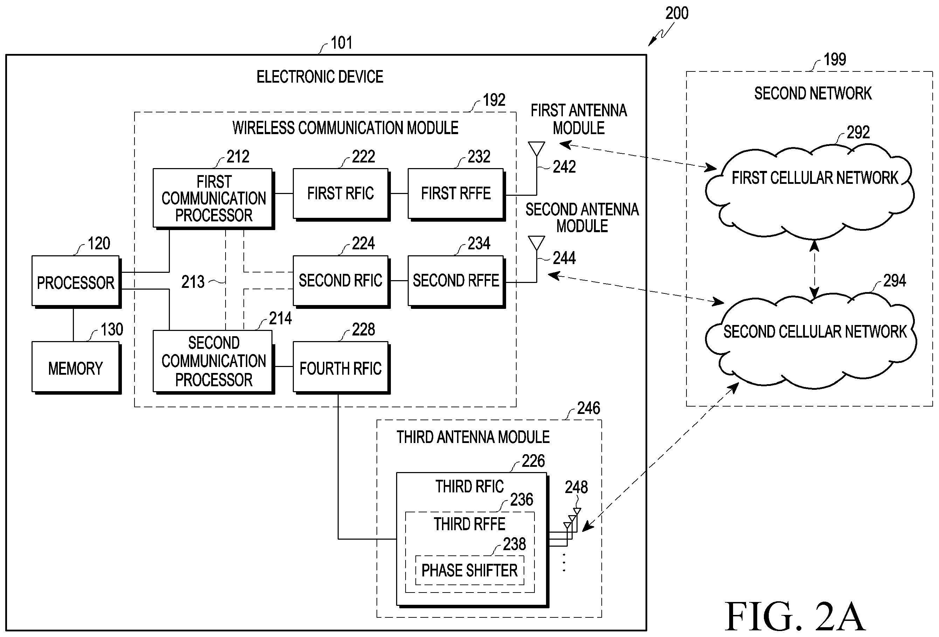

FIG. 2A is a block diagram 200 of the electronic device 101 for supporting legacy network communication and 5G network communication according to various embodiments. Referring to FIG. 2A, the electronic device 101 may include a first communication processor 212, a second communication processor 214, a first radio frequency integrated circuit (RFIC) 222, a second RFIC 224, a third RFIC 226, a fourth RFIC 228, a first radio frequency front end (RFFE) 232, a second RFFE 234, a first antenna module 242, a second antenna module 244, a third antenna module 246, and antennas 248. The electronic device 101 may further include a processor 120 and memory 130. A second network 199 may include a first cellular network 292 and a second cellular network 294. According to another embodiment, the electronic device 101 may further include at least one component among the components described in FIG. 1, and the second network 199 may further include at least one other network. According to an embodiment, the first communication processor 212, the second communication processor 214, the first RFIC 222, the second RFIC 224, the fourth RFIC 228, the first RFFE 232, and the second RFFE 234 may form at least a part of a wireless communication module 192. According to another embodiment, the fourth RFIC 228 may be omitted or may be included as a part of the third RFIC 226.

The first communication processor 212 may support establishment of a communication channel of a band to be used for wireless communication with the first cellular network 292, and legacy network communication through the established communication channel. According to various embodiments, the first cellular network may be a legacy network including a second generation (2G), 3G, 4G, or long term evolution (LTE) network. The second communication processor 214 may support establishment of a communication channel corresponding to a designated band (e.g., about 6 GHz to about 60 GHz) among bands to be used for wireless communication with the second cellular network 294, and 5G network communication via the established communication channel. According to various embodiments, the second cellular network 294 may be a 5G network defined by 3GPP. Additionally, according to an embodiment, the first communication processor 212 or the second communication processor 214 may support establishment of a communication channel corresponding to another designated band (e.g., about 6 GHz or less) among bands to be used for wireless communication with the second cellular network 294, and 5G network communication via the established communication channel.

The first communication processor 212 may transmit and receive data to and from the second communication processor 214. For example, data that had been classified to be transmitted through the second cellular network 294 may be changed to be transmitted through the first cellular network 292. In this case, the first communication processor 212 may receive transmission data from the second communication processor 214. For example, the first communication processor 212 may transmit and receive data to and from the second communication processor 214 via an inter-processor interface 213. The inter-processor interface 213 may be implemented as, for example, a universal asynchronous receiver/transmitter UART (e.g., a high speed UART (HS-UART) or a peripheral component interconnect bus express (PCIe)) interface, but is not limited thereto. Alternatively, the first communication processor 212 and the second communication processor 214 may exchange control information and packet data information using, for example, shared memory. The first communication processor 212 may transmit and receive various information, such as sensing information, information on output strength, and resource block (RB) allocation information, to and from the second communication processor 214.

According to an implementation, the first communication processor 212 may not be directly connected to the second communication processor 214. In this case, the first communication processor 212 may transmit and receive data to and from the second communication processor 214 via the processor 120 (e.g. an application processor). For example, the first communication processor 212 and the second communication processor 214 may transmit and receive data to and from the processor 120 (e.g., an application processor) via an HS-UART interface or a PCIe interface, but the type of interface is not limited thereto. Alternatively, the first communication processor 212 and the second communication processor 214 may exchange control information and packet data information with the processor 120 (e.g., an application processor) using shared memory.

According to an embodiment, the first communication processor 212 and the second communication processor

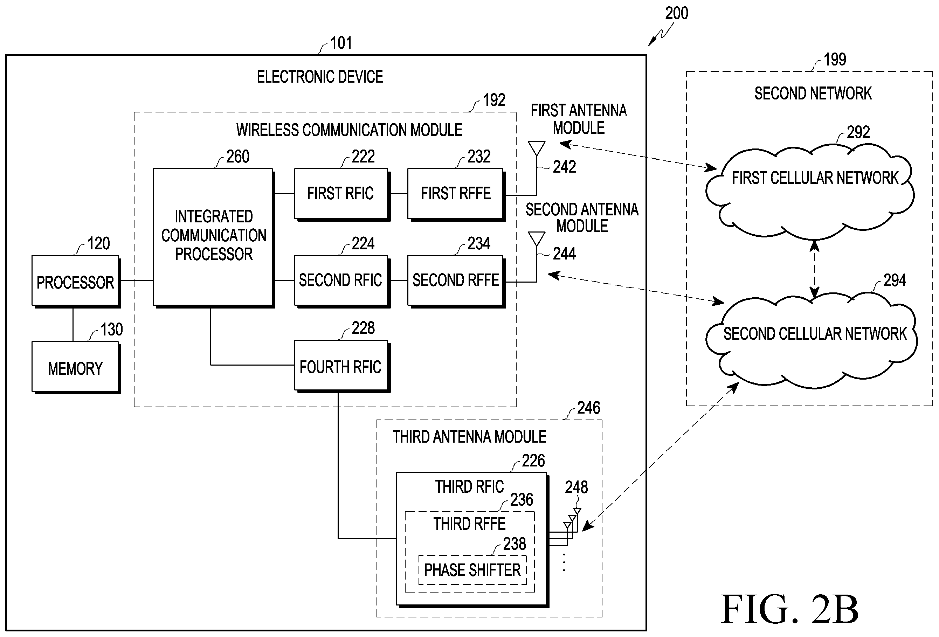

214 may be implemented in a single chip or in a single package. According to various embodiments, the first communication processor 212 or the second communication processor 214 may be disposed in a single chip or in a single package together with the processor 120, the auxiliary processor 123, or the communication module 190. For example, as shown in FIG. 2B, the integrated communication processor 260 may support both functions for communication with the first cellular network 292 and the second cellular network 294.

As described above, at least one of the processor 120, the first communication processor 212, the second communication processor 214, or the integrated communication processor 260 may be implemented as a single chip or a single package. In this case, the single chip or the single package may include memory (or storage means) configured to store instructions that cause at least some of operations performed according to various embodiments to be carried out, and a processing circuit (or, without limitation as to designation, an operation circuit) that executes the instructions.

The first RFIC 222 may, during transmission, convert a baseband signal generated by the first communication processor 212 into a radio frequency (RF) signal of about 700 MHz to about 3 GHz used in the first cellular network 292 (e.g., a legacy network). During reception, the RF signal may be obtained from the first network 292, (e.g., the legacy network) through an antenna (e.g., the first antenna module 242), and may be preprocessed via an RFFE (e.g., the first RFFE 232). The first RFIC 222 may convert the preprocessed RF signal into a baseband signal such that the baseband signal is processed by the first communication processor 212.

The second RFIC 224 may, during transmission, convert a baseband signal generated by the first communication processor 212 or the second communication processor 214 into an RF signal (hereinafter, a 5G Sub6 RF signal) of a Sub6 band (e.g., about 6 GHz or less) used in the second cellular network 294 (e.g., a 5G network). During reception, the 5G Sub6 RF signal may be obtained from the second cellular network 294 (e.g., the 5G network) through an antenna (e.g., the second antenna module 244), and may be preprocessed via an RFFE (e.g., the second RFFE 234). The second RFIC 224 may convert the preprocessed 5G Sub6 RF signal into a baseband signal such that the baseband signal is processed by a corresponding one of the first communication processor 212 or the second communication processor 214.

The third RFIC 226 may convert a baseband signal generated by the second communication processor 214 into an RF signal in a 5G Above6 band (e.g., about 6 GHz to about 60 GHz) to be used in the second cellular network 294 (e.g., a 5G network) (hereinafter, a 5G Above6 RF signal). During reception, the 5G Above6 RF signal may be obtained from the second cellular network 294 (e.g., a 5G network) through an antenna (e.g., the antenna 248) and may be preprocessed via the third RFFE 236. The third RFIC 226 may convert the preprocessed 5G Above6 RF signal into a baseband signal such that the baseband signal is processed by the second communication processor 214. According to an embodiment, the third RFFE 236 may be configured as a part of the third RFIC 226.

According to an embodiment, the electronic device 101 may include the fourth RFIC 228 separately from or at least as a part of the third RFIC 226. In this case, the fourth RFIC 228 may convert a baseband signal generated by the second communication processor 214 into an RF signal (hereinafter, an IF signal) in an intermediate frequency band (e.g., about 9 GHz to about 11 GHz) and may transmit the IF signal to the third RFIC 226. The third RFIC 226 may convert the IF signal into the 5G Above6 RF signal. During reception, the 5G Above6 RF signal may be received from the second cellular network 294 (e.g., a 5G network) through an antenna (e.g., the antenna 248) and may be converted into the IF signal by the third RFIC 226. The fourth RFIC 228 may convert the IF signal into a baseband signal such that the baseband signal is processed by the second communication processor 214.

According to an embodiment, the first RFIC 222 and the second RFIC 224 may be implemented as at least a part of a single chip or a single package. According to various embodiments, when the first RFIC 222 and the second RFIC 224 are implemented as a single chip or a single package in FIG. 2A or FIG. 2B, the first RFIC 222 and the second RFIC 224 may be implemented as an integrated RFIC. In this case, the integrated RFIC may be connected to the first RFFE 232 and the second RFFE 234 to convert a baseband signal into a signal of a band supported by the first RFFE 232 and/or the second RFFE 234, and may transmit the converted signal to one of the first RFFE 232 and the second RFFE 234. According to an embodiment, the first RFFE 232 and the second RFFE 234 may be implemented as at least a part of a single chip or a single package. According to an embodiment, at least one of the first antenna module 242 or the second antenna module 244 may be omitted or may be combined with another antenna module to process RF signals of corresponding multiple bands.

According to an embodiment, the third RFIC 226 and the antenna 248 may be disposed on the same substrate to configure the third antenna module 246. The wireless communication module 192 or the processor 120 may be disposed on a first substrate (e.g., a main PCB). In this case, the third RFIC 226 may be disposed in a partial area (e.g., a lower surface) of a second substrate (e.g., a sub PCB) separate from the first substrate, and the antenna 248 may be disposed in another partial area (e.g., an upper surface) thereof, thereby configuring the third antenna module 246. By arranging the third RFIC 226 and the antenna 248 on the same substrate, it is possible to reduce the length of a transmission line therebetween. This may, for example, reduce loss (e.g., attenuation), caused by a transmission line, of a signal in a high frequency band (e.g., about 6 GHz to about 60 GHz) used for 5G network communication. Accordingly, the electronic device 101 may improve a quality or a speed of communication with the second network 294 (e.g., a 5G network).

According to an embodiment, the antenna 248 may be configured as an antenna array including a plurality of

antenna elements that may be used for beamforming. In this case, the third RFIC 226 may include, as a part of the third RFFE 236, a plurality of phase shifters 238 corresponding to the plurality of antenna elements. During transmission, each of the plurality of phase shifters 238 may convert, via a corresponding antenna element, a phase of a 5G Above6 RF signal to be transmitted to an outside (e.g., a base station of a 5G network) of the electronic device 101. During reception, each of the plurality of phase shifters 238 may convert, via the corresponding antenna element, a phase of the 5G Above6 RF signal received from the outside into the same or substantially the same phase. This enables transmission or reception of signals between the electronic device 101 and the outside via beamforming.

The second cellular network 294 (e.g., a 5G network) may be operated independently (e.g., Stand-Alone SA) of the first cellular network 292 (e.g., a legacy network) or may be operated in connection therewith (e.g., Non-Stand Alone NSA). For example, a 5G network may include only an access network (e.g., a 5G radio access network (RAN) or a next generation RAN (NG RAN)) and may not include a core network (e.g., a next generation core (NGC)). In this case, after accessing the access network of the 5G network, the electronic device 101 may access an external network (e.g., the Internet) under control of a core network of a legacy network (e.g., an evolved packet core (EPC)). Protocol information for communication with a legacy network (e.g., LTE protocol information) or protocol information for communication with a 5G network (e.g., New Radio (NR) protocol information) may be stored in the memory 230 and may be accessed by another component (e.g., the processor 120, the first communication processor 212, or the second communication processor 214).

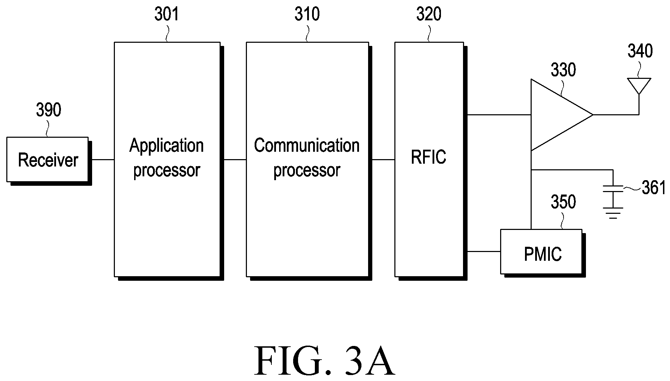

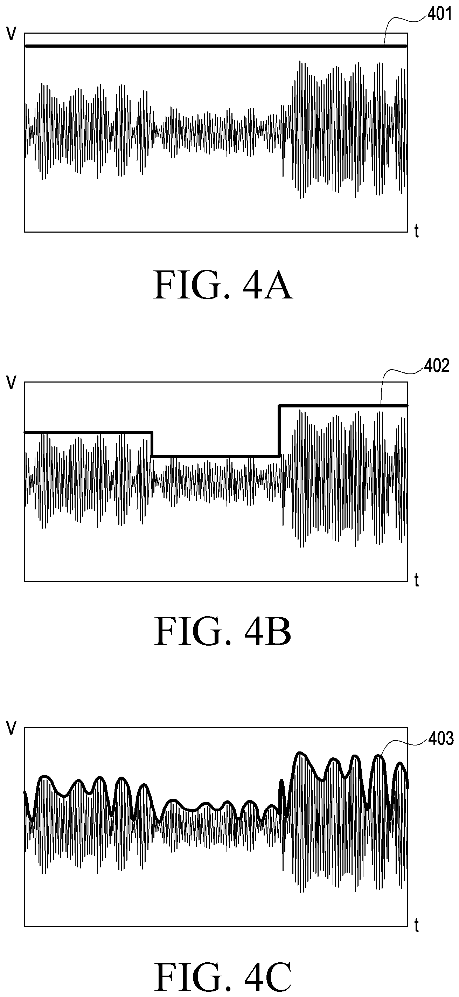

FIG. 3A is a block diagram of an electronic device including a power amplifier according to various embodiments. The embodiment of FIG. 3A will be described in more detail with reference to FIGS. 4A to 4C. FIGS. 4A to 4C each illustrate an operation mode of a power management integrated circuit (PMIC) according to various embodiments.

According to various embodiments, the electronic device 101 may include at least one of an application processor 301, a communication processor 310, an RFIC 320, a power amplifier 330, an antenna 340, a PMIC 350, a capacitor 361, or a receiver 390.

According to an embodiment, the communication processor 310 (e.g., at least one of the first communication processor 212, the second communication processor 214, or the integrated communication processor 260) may provide a baseband signal for transmission to the RFIC 320 (e.g., at least one of the first RFIC 222, the second RFIC 224, the third RFIC 226, or the fourth RFIC 228). Alternatively, the communication processor 310 may receive and process a baseband signal for reception from the RFIC 320.

According to an embodiment, the application processor 301 may execute a call application. The application processor 301 may perform a call based on the call application. For example, the application processor 301 may perform an outgoing call based on a request to initiate a call (e.g., selection of an icon for a call initiation request, or a voice command, without limitation) from a user, or may perform an incoming call based on a request for responding to an incoming call (e.g., selection of an icon for receiving, or a voice command, without limitation), but is not limited thereto. For example, the application processor 301 may perform a call based on at least one application (e.g., a server-client-based application) providing a call function other than a call application (e.g., an IMS internet protocol multimedia subsystem-based application), and those skilled in the art will understand that there is no limitation on a type of the application.

The application processor 301 may output voice during a call through the receiver 390. The receiver 390 may be a device for outputting voice, but is not limited thereto. The receiver 390 may be disposed to contact or be adjacent to an ear of a user when the user holds the electronic device 101, but a position thereof is not limited. For example, the application processor 301 may configure the receiver 390 as a default output device for a call. For example, the application processor 301 may configure the receiver 390 to output voice for a call, based on another accessory for voice output, such as a wired voice output device (e.g., wired earphones, without limitation) or a wireless voice output device (e.g., wireless earphones or a wireless speaker, without limitation), not being operatively connected (e.g., physical insertion or establishment (or connection) of a wireless communication channel, without limitation). For example, the application processor 301 may configure the receiver 390 to output voice during a call, based on not being configured to a speaker phone mode, but is not limited thereto.

According to an embodiment, the RFIC 320 may generate an RF signal corresponding to a baseband signal for transmission and may provide the RF signal to the power amplifier 330. Although FIG. 3A illustrates that the baseband signal for transmission is provided to the RFIC 320 via a single line, this is an example, and those skilled in the art will understand that baseband signals of an in-phase I component and a quadrature Q component may be provided to the RFIC 320. The power amplifier 330 may be included in an RFFE (e.g., at least one of the first RFFE 232, the second RFFE 234, or the third RFFE 236). The RFFE may be configured in the form of a power amplifier module (PAM), a front end module (FEM), a power amplifier module including duplexer (PAMiD), an LNA and PAM with integrated duplexer or diplexer (LPAMID), or a PA with integrated low noise amplifier and filter (LPAMIF), and there is no limit to an implementation form thereof. Although FIG. 3A illustrates that the power amplifier 330 is connected to the RFIC 320, those skilled in the art will understand that, in addition to the power amplifier 330, a filter and/or an antenna switching module (ASM) may be further included in the RFFE. Although FIG. 3A illustrates that one RFIC 320, one power amplifier 330, and one antenna 340 are included in the electronic device 101, this is for convenience of description, and those skilled in the art will

understand that a plurality of RFICs, power amplifiers, and antennas may be implemented in the electronic device 101. Meanwhile, the RFFE including the RFIC 320 and the power amplifier 330 in FIG. 3A may also be referred to as an RF circuit.

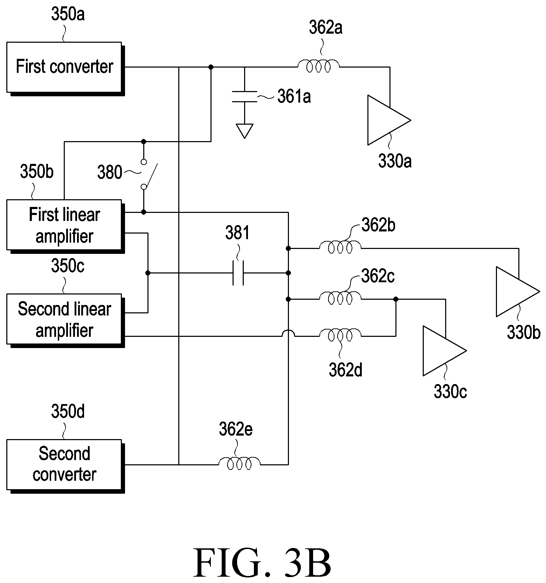

According to an embodiment, the PMIC 350 (e.g., at least one of a buck/boost converter, a buck converter, or a boost converter) may provide a supply voltage (Vcc) to the power amplifier 330 using supplied power. The power amplifier 330 may amplify the RF signal provided from the RFIC 320, by using the supply voltage Vcc. The PMIC 350 may be configured to operate according to, for example, an APT mode. Alternatively, the PMIC 350 may operate in a direct mode or an ET mode. When operating in the ET mode, the PMIC 350 may be replaced with a linear amplifier, which will be described with reference to FIG. 3B. In an example, when operating according to the direct mode, the supply voltage (Vcc) 401 of the power amplifier 330 may be configured to a designated value as shown in FIG. 4A. In the direct mode, the supply voltage 401 having the designated value may be provided to the power amplifier 330 regardless of a magnitude of transmission power of each signal. In this case, wasted power consumption may be relatively large. In another example, when operating according to the APT mode, the supply voltage (Vcc) 402 of the power amplifier 330 may be configured (or changed) according to a designated time unit (e.g., a slot (or a subframe)) as shown in FIG. 4B. In a subframe (or slot) in which transmission power of an RF signal is configured to 10 to 18 dBm, a supply voltage (Vcc) of 3 V may be supplied to the power amplifier 330, and in a subframe (or slot) in which transmission power of the RF signal is configured to 18 to 24 dBm, a supply voltage (Vcc) of 4 V may be supplied to the power amplifier 330. In another example, when operating according to the ET mode, the supply voltage (Vcc) 403 of the power amplifier 330 may be configured (or changed) in real time according to a magnitude of transmission power of the RF signal as shown in FIG. 4C. When operating according to the ET mode, the PMIC 350 may track the transmission power of the RF signal in real time and may provide a supply voltage corresponding to an envelope of the transmission power to the power amplifier 330. A time interval for configuring (or changing) the supply voltage (Vcc) in the ET mode may be shorter than a time interval for configuring (or changing) the supply voltage (Vcc) in the APT mode. The communication processor 310 (or a modulator) may determine a magnitude of the supply voltage configured in the APT mode or the ET mode by using, for example, a value ($\sqrt{I^2+Q^2}$) based on I/Q signals of the baseband signal. Although not illustrated, the electronic device 101 may include at least one of an envelope detector, an envelope shaper, or an amplifier, but is not limited thereto.

According to an embodiment, the PMIC 350 may provide the supply voltage (Vcc) to the power amplifier 330 for transmission of the RF signal, according to the APT mode. For example, the PMIC 350 may include a switch. According to a determined magnitude of the supply voltage (Vcc), an on duration and an off duration of the switch (or a ratio of the on duration and the off duration) may be determined, but those skilled in the art will understand that there is no limitation on a method of controlling the magnitude of the supply voltage (Vcc) in the PMIC 350. For example, when an RF signal in an ultra high band (UHB) or a relatively wide bandwidth operating band (e.g., B48 band, B42 band, N48 band, N41 band, N77 band, N78 band, or N79 band) is transmitted, the APT mode may be used, but is not limited thereto. The PMIC 350 may control a charge amount and/or a discharge amount of the capacitor 361 to supply the determined supply voltage (Vcc).

FIG. 3B is a block diagram of an electronic device including a power amplifier according to various embodiments.

According to an embodiment, the electronic device 101 may include at least one of a first converter 350a, a first linear amplifier 350b, a second linear amplifier 350c, or a second converter 350d. A capacitor 361a may be connected to the first converter 350a. The first converter 350a may be connected to the power amplifier 330a through a coil 362a. The first converter 350a may be, for example, a buck/boost converter, but is not limited thereto limitation. The first converter 350a may apply or stop applying a driving voltage (Vcc) determined according to, for example, an APT mode to the capacitor 361a using a voltage from the battery 189 (or a PMIC). The driving voltage (Vcc) applied to the capacitor 361a may be input to the power amplifier 330a. In the APT mode, a magnitude of the driving voltage (Vcc) may be determined, for example, in units of 1ms, but is not limited thereto. If the capacitor 361a is not present, an output voltage may be switched rather than output as a constant value. Accordingly, the capacitor 361a may be an element that is essentially required in the APT mode. The power amplifier 330a may be used exclusively for the APT mode, but is not limited thereto.

According to an embodiment, a switch 380 may selectively connect the capacitor 361a to the power amplifier 330b and/or the power amplifier 330c. The power amplifier 330b and/or the power amplifier 330c may be supplied with a driving voltage (Vcc) determined according to one of the APT mode or the ET mode. When the power amplifier 330b and/or the power amplifier 330c operate in the APT mode, the switch 380 may be controlled to be in an on state. The power amplifier 330b may amplify an RF signal based on a first RAT (e.g., E-UTRA), and the power amplifier 330c may amplify an RF signal based on a second RAT (e.g., NR), but is not limited thereto. When processing of the RF signal based on the first RAT (e.g., E-UTRA) is determined to be in the APT mode, the driving voltage (Vcc) applied to the capacitor 361a by the first converter 350a may be provided to the power amplifier 330b through the switch 380 and a coil 362b. When processing of the RF signal based on the second RAT (e.g., NR) is determined to be in the APT mode, the driving voltage (Vcc) applied to the capacitor 361a by the first converter 350a may be provided to the power amplifier 330c through the switch 380 and a coil 362c.

When the power amplifier 330b and/or the power amplifier 330c operate in the ET mode, the switch 380 may be

controlled to be in an off state. When the switch 380 is controlled to be in the off state, the linear amplifiers 350b, 350c may provide a driving voltage (Vcc) that varies in real time to the power amplifier 330b and/or the power amplifier 330c. The linear amplifier 350b may provide a driving voltage (Vcc) for amplification of an RF signal based on the first RAT (e.g., E-UTRA), and the linear amplifier 350c may provide a driving voltage (Vcc) for amplification of an RF signal based on the second RAT (e.g., NR), but is not limited thereto. The second converter 350d may be implemented as a slow converter in one example and may provide a DC current. The second converter 350d may operate in the ET mode and may not operate in the APT mode. The linear amplifiers 350b, 350c may be connected to a capacitor 381. The capacitor 381 may be connected to each of the power amplifiers 330b, 330c through the coil 362b and the coil 362c.

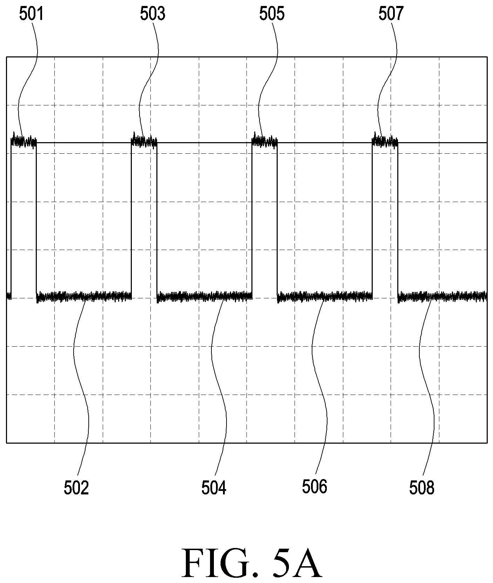

FIG. 5A illustrates a graph of a voltage applied to a capacitor connected to a power amplifier according to various embodiments.

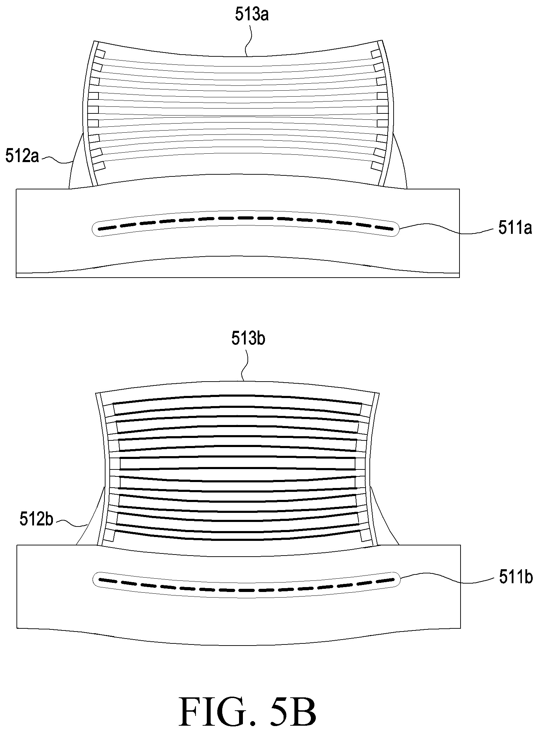

According to an embodiment, a driving voltage (Vcc) of a power amplifier for amplifying an RF signal (e.g., the power amplifier 330 of FIG. 3A or the power amplifiers 330a, 330b, 330c of FIG. 3B) may be applied to a capacitor (e.g., the capacitor 361 of FIG. 3A or the capacitor 361a of FIG. 3B), as described above. As shown in FIG. 5A, driving voltages (Vcc) 501, 503, 505, 507 may be applied to the capacitor (e.g., the capacitor 361 of FIG. 3A or the capacitor 361a of FIG. 3B) during a period in which an RF signal is transmitted (e.g., a transmission period). Meanwhile, during a period in which the RF signal is not transmitted (e.g., a non-transmission period), as the capacitor (e.g., the capacitor 361 of FIG. 3A or the capacitor 361a of FIG. 3B) is discharged, floating voltages 502, 504, 506, 508 may be applied. As such, audible noise may occur according to charging and discharging of the capacitor (e.g., the capacitor 361 of FIG. 3A, or the capacitor 361a of FIG. 3B), and this will be described with reference to FIG. 5B.

FIG. 5B illustrates a cross-sectional view of a capacitor during charging and discharging according to various embodiments.

As described above, the capacitor (e.g., the capacitor 361 of FIG. 3A or the capacitor 361a of FIG. 3B) may be charged during a transmission period and may be discharged during a non-transmission period. For example, during discharge, a capacitor (e.g., the capacitor 361 of FIG. 3A or the capacitor 361a of FIG. 3B) may have a first shape 513a, and during charging, the capacitor (e.g., the capacitor 361 of FIG. 3A or the capacitor 361a of FIG. 3B) may have a second shape 513b. A change in shape of the capacitor (e.g., the capacitor 361 of FIG. 3A, or the capacitor 361a of FIG. 3B) due to charging and discharging may cause a change in shapes of surrounding hardware, such as a PCB or solder. For example, when the capacitor (e.g., the capacitor 361 of FIG. 3A, or the capacitor 361a of FIG. 3B) has the first shape 513a, the PCB may have the first shape 511a and the solder may have the first shape 512a. For example, when the capacitor (e.g., the capacitor 361 of FIG. 3A, or the capacitor 361a of FIG. 3B) has the second shape 513b, the PCB may have the second shape 511b and the solder may have the second shape 512b. According to such changes in shape, vibration may occur, and when a frequency of the vibration is included in an audible band (20 to 20000 Hz), audible noise may be heard by a user. When the capacitor (e.g., the capacitor 361 of FIG. 3A or the capacitor 361a of FIG. 3B) is disposed close to a receiver of the electronic device 101, audible noise may be heard during a phone call, thereby degrading call quality. Particularly, in a miniaturized electronic device 101, because a mounting area is small, a distance between the capacitor (e.g., the capacitor 361 of FIG. 3A or the capacitor 361a of FIG. 3B) and the receiver may be designed to be very close, which may cause degradation of call quality. In addition, when an operating frequency band requiring relatively high transmission power and/or an operating frequency band supporting a relatively wide bandwidth is used, a relatively high driving voltage (Vcc) may be required. For example, a B38 frequency band having a bandwidth of 10 MHz may require a relatively low driving voltage (Vcc) of 2.9 V when a target transmission power is 23 dBm. For example, a B48 frequency band having a bandwidth of 20 MHz may require a relatively high driving voltage Vcc of 4.4 V when a target transmission power is 24 dBm. An N41 frequency band having a bandwidth of 50 MHz or more may require a relatively high driving voltage (Vcc) of 5.0 V when a target transmission power is 26 dBm. When a relatively high driving voltage (Vcc) is applied to and discharged from the capacitor (e.g., the capacitor 361 in FIG. 3A, or the capacitor 361a in FIG. 3B), a voltage difference between charging and discharging may also be relatively large. A relatively large voltage difference between charging and discharging may cause relatively large audible noise.

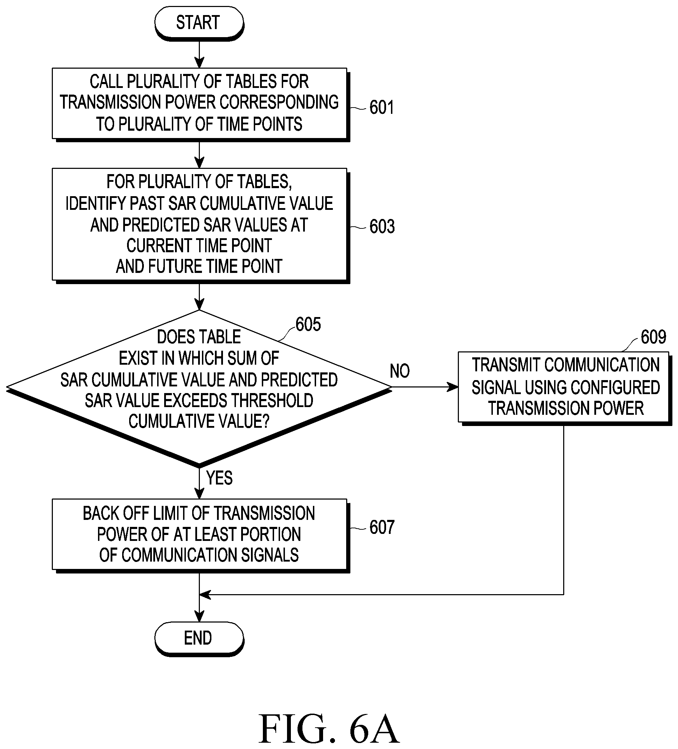

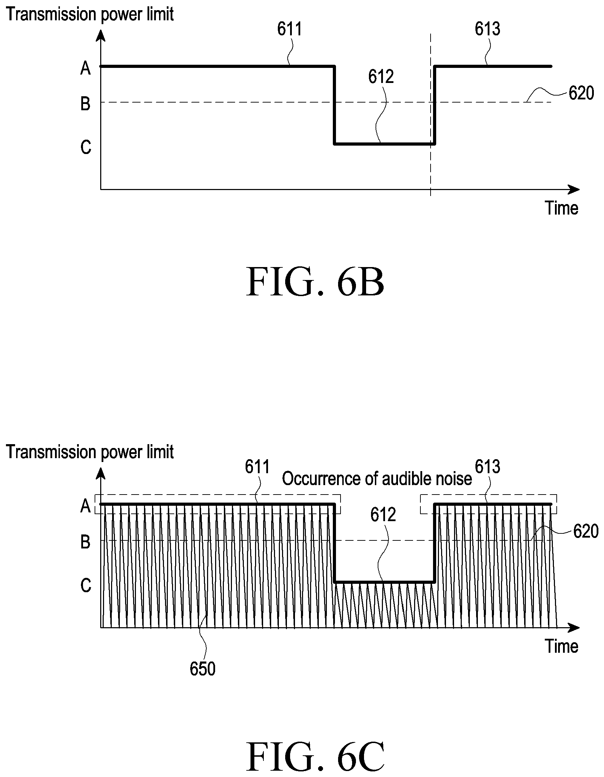

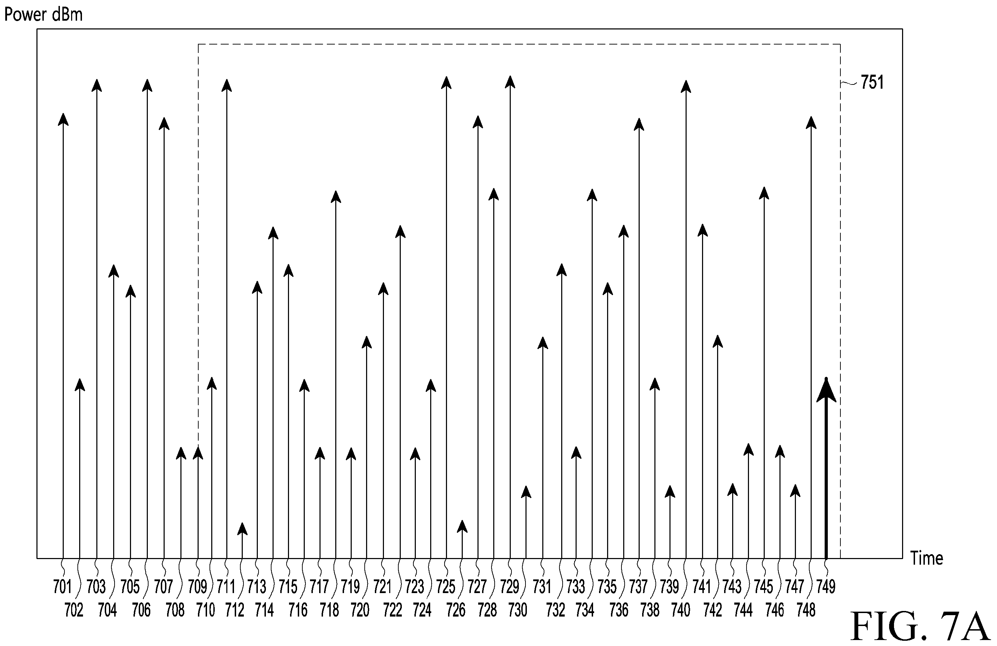

As described above, the electronic device 101 may reduce a magnitude of noise by reducing the magnitude of the driving voltage (Vcc) in an environment in which relatively large noise is expected. The electronic device 101 may reduce the driving voltage (Vcc) by reducing a maximum transmission power level (MTPL) (which may also be referred to as a limit of transmission power). Meanwhile, the electronic device 101 may configure the MTPL in consideration of a specific absorption rate (SAR). Electromagnetic waves radiated by the electronic device 101 may have harmful effects on a human body, and various domestic and foreign organizations attempt to limit electromagnetic waves that have a harmful effect on the human body. For example, SAR is a value indicating how much electromagnetic waves radiated from a mobile communication terminal are absorbed by a human body. SAR may use a unit of kW/g (or mW/g), which may indicate an amount of power (kW, W, or mW) absorbed per 1 g of a human body. As issues of harmful effects of electromagnetic waves on a human body have arisen, SAR limit standards for mobile communication terminals have been established. The electronic device 101 may configure the MTPL to reduce audible noise while satisfying SAR regulations, which will be described later. The electronic device 101 may configure the MTPL such that an average of SAR over a predetermined

period is less than or equal to a threshold average value, or such that a cumulative value of SAR over the predetermined period is less than or equal to a threshold cumulative value. As described above, transmission power may correspond to a magnitude of SAR. Accordingly, it will be understood by those skilled in the art that the electronic device 101 may configure a maximum value of transmission power (or transmission power) such that an average of transmission power over a predetermined period is less than or equal to a threshold average value, or such that a cumulative value of transmission power over the predetermined period is less than or equal to a threshold cumulative value. Hereinafter, a configuration for configuring the MTPL based on an average or cumulative value of SAR will be described with reference to FIGS. 6A and 6B and FIGS. 7A to 7E, and thereafter, a configuration for configuring the MTPL in consideration of SAR and audible noise will be described.

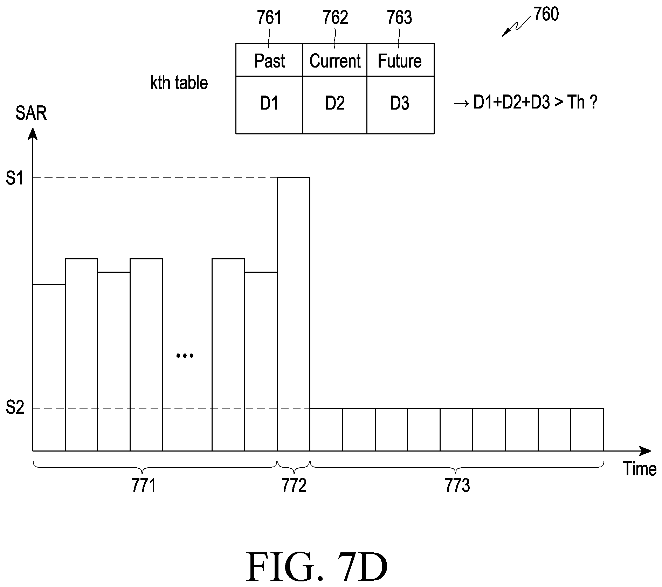

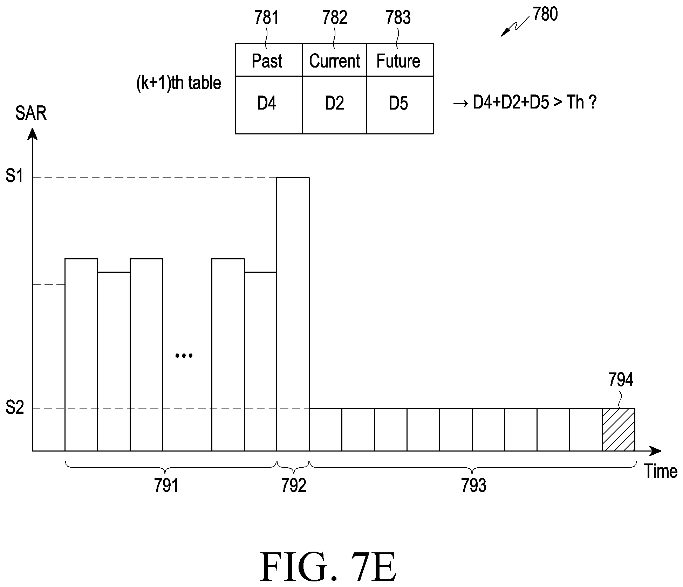

FIG. 6A is a flowchart illustrating a method of operating an electronic device according to various embodiments. The embodiment of FIG. 6A will be described with reference to FIG. 6B, FIG. 6C, and FIGS. 7A to 7E. FIG. 6B illustrates an MTPL over time according to various embodiments. FIG. 6C illustrates transmission power over time according to various embodiments. FIGS. 7A to 7C each illustrate a graph of transmission power over time according to various embodiments. FIGS. 7D and 7E each illustrate a table of transmission power over time according to various embodiments.

According to an embodiment, the electronic device 101 may back off (which may also be referred to as reduction or adjustment) an MTPL (or transmission power) based on SAR. For example, a user device may back off the MTPL or the transmission power when SAR expected due to transmission power is expected to exceed a threshold value. Those skilled in the art will understand that backoff of the MTPL in the disclosure may be interchangeably applied with backoff of transmission power. For example, when occurrence of a specific event (e.g., grip, hot-spot, or proximity) is identified, the user device may transmit an RF signal with backoff power corresponding to the event or may transmit the RF signal with transmission power configured based on a backed-off MTPL.

Referring to FIG. 6A, according to an embodiment, the electronic device 101 (e.g., at least one of the processor 120, the first communication processor 212, the second communication processor 214, or the integrated communication processor 260) may call (or read) a plurality of tables for transmission power corresponding to a plurality of time points in operation 601. Before describing the embodiment associated with FIG. 6A, terms as shown in Table 1 are defined as follows.

[Table 1]

| |
|---|
| a. Normal MAX Power: maximum transmission power when a margin of SAR remains |
| b. Normal Max SAR: a value of SAR generated when operating at Normal MAX Power |
| c. Backoff MAX Power: maximum transmission power when performing backoff due to insufficient SAR margin |
| d. Backoff Max SAR: a value of SAR generated when operating at Backoff MAX Power |
| e. Measurement Time T: a period for calculating cumulative SAR or calculating an average of SAR |
| f. Measurement Period P: a period (or time interval) for calculating SAR |
| g. Number of tables for calculating SAR: T/P - 1 |
| h. Average SAR LIMIT: a maximum average SAR value that should not be exceeded during T |
| i. Average Time A_Time: a time during which SAR is cumulative and measured |
| j. Cumulative SAR: a sum of cumulative SAR during Average Time |
| k. Max cumulative SAR: Average SAR LIMIT × Measurement Time |
| l. Average SAR: an average SAR value used during Average Time |
| m. Tx Room: Max cumulative SAR - cumulative SAR, representing remaining available SAR |
| n. Remain Time R_Time: total Measurement Time - a time during which SAR has been measured (A_Time) |

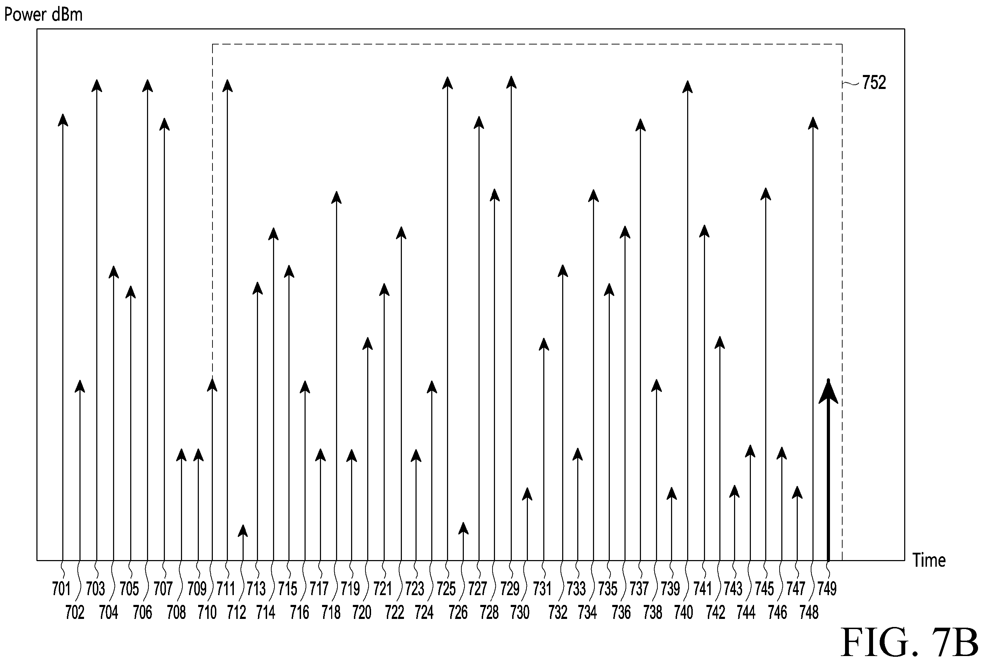

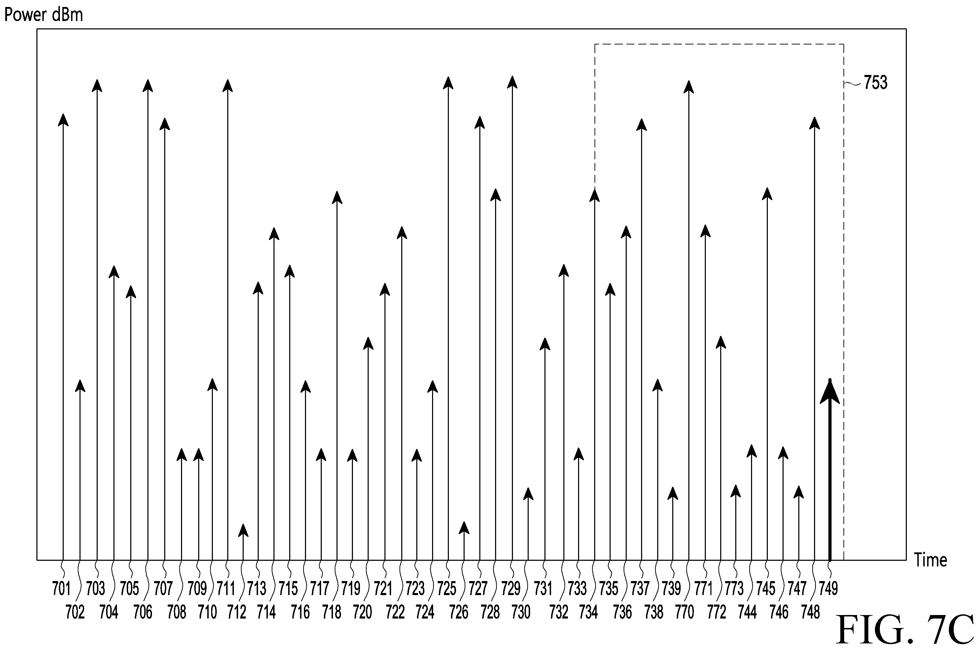

First, for explanation of tables, reference is made to FIGS. 7A to 7C. Referring first to FIG. 7A, a graph including transmission power for a plurality of time points 701 to 749 is illustrated. Cumulative SAR (Cumulative SAR of Table 1) during a Measurement Time (Measurement Time of Table 1), for example, a Measurement Time including 50 time points, may be required to maintain a value less than or equal to Max cumulative SAR (Max cumulative SAR of Table 1). The electronic device 101 may, for example, determine transmission power of an RF signal to be transmitted at a current time point 749 such that cumulative SAR at the current time point 749 and at arbitrary past time points 709 to 748 (e.g., Average Time of Table 1), together with cumulative SAR at additional nine future time points (not shown) (e.g., Remain Time of Table 1), maintains a value less than or equal to the Max cumulative SAR. In addition, as shown in FIG. 7B, the electronic device 101 may identify transmission powers 752 that are shifted by one time point from transmission powers 751 at the current time point 749 and arbitrary past time points 709 to 748 of FIG. 7A. The meaning that the time point is shifted by one may indicate that data corresponding to the oldest time point (e.g., time point 709 of FIG. 7A) is not reflected. The number of transmission powers 752 at the current time point 749 and arbitrary past time points 710 to 748 may be 40, which may be smaller by one than 41, which is the number of transmission powers 751 of FIG. 7A. The electronic device 101 may

determine transmission power at the current time point 749 such that a sum of SAR based on the transmission powers 752 and predicted SAR at an additional 10 future time points maintains a value less than or equal to the Max cumulative SAR. Meanwhile, SAR may be expressed as RF exposure. According to an embodiment, when RF exposure is limited to 1.6 W/kg, SAR may be substantially limited so as not to be absorbed beyond the RF exposure. For example, a concept of accumulating RF exposure may be identical to a concept of accumulating SAR. A threshold RF exposure may include a limitation of cumulative SAR. Hereinafter, SAR may be replaced with RF exposure, and those skilled in the art will understand that RF exposure may include not only SAR but also power density PD. As shown in FIG. 7C, the electronic device 101 may identify transmission powers 753 at the current time point 749 and arbitrary past time points 734 to 748, which are shifted by 25 time points from transmission powers 751 of FIG. 7A. The number of transmission powers 753 may be 16, which may be smaller by 25 than 41, which is the number of transmission powers 751 of FIG. 7A. The electronic device 101 may determine transmission power at the current time point 749 such that a sum of SAR based on the transmission powers 753 and predicted SAR at an additional 34 future time points maintains a value less than or equal to the Max cumulative SAR. Although not illustrated, the electronic device 101 may manage a plurality of graphs shifted by one time point. A period for calculating SAR may correspond to Measurement Period (P) of Table 1 and may be, for example, an interval between transmission powers in FIGS. 7A to 7C. The electronic device 101 may calculate and/or manage T/P - 1 tables for a specific time point. Hereinafter, a configuration for identifying a predicted SAR value will be described with reference to FIGS. 7D and 7E.

Referring to FIG. 7D, the electronic device 101 may identify a kth SAR table 760. The kth SAR table 760 may include a cumulative SAR value 761 (D1) at at least one past time point, a maximum SAR value 762 (D2) at a current time point, and a predicted SAR value 763 (D3) at at least one future time point. Referring to the graph, a cumulative SAR value corresponding to at least one past time point 761 may be D1. According to an embodiment, the cumulative SAR value 761 at a past time point may include a value obtained by cumulatively summing RF exposure at the past time point. D1, which is the cumulative SAR value 761 at at least one past time point, may be identified based on an antenna configuration. In a first table, the number of past time points may be smaller by one than the total number of time points (e.g., 100 time points) corresponding to a Measurement Time (e.g., 50 seconds). The total number of time points N (e.g., 100) may be a result obtained by dividing the Measurement Time by a sampling interval (or a shift interval). Accordingly, in the kth table, the number of past time points may be smaller than the total number of time points by k. The electronic device 101 may identify D1, which is a cumulative SAR value of N-k past time points 771. The electronic device 101 may use a maximum SAR value (S1) for the current time point 772. The maximum SAR value (S1) (e.g., normal max SAR of Table 1) may be a SAR value corresponding to a maximum transmission power (e.g., normal max power of Table 1) designated in the electronic device 101. According to an embodiment, for the current time point 772, a SAR value immediately preceding the current time point 772 may be used. According to an embodiment, for the current time point 772, an average SAR value of past time points 771 preceding the current time point 772 may be used. For at least one future time point 773, the electronic device 101 may perform a calculation using a sum of SAR values (S2) (e.g., backoff max SAR of Table 1) corresponding to backoff transmission power (e.g., backoff max power of Table 1). According to an embodiment, a backoff operation may include lowering transmission power of an RF signal applied to an antenna (or a maximum transmission power) based on a designated criterion in order to satisfy a SAR criterion. The electronic device 101 may identify D3 as a cumulative SAR value for at least one future time point 773. In the kth table, the number of future time points may be k-1. Accordingly, in the kth table, the electronic device 101 may identify whether D1 + D2 + D3, which corresponds to a total SAR for N time points composed of N-k past time points, one current time point, and k-1 future time points, exceeds a Max cumulative SAR. When it is identified that the total SAR exceeds the Max cumulative SAR, the electronic device 101 may back off transmission power at the current time point. Referring to FIG. 7E, the electronic device 101 may also identify a (k+1)th table 780 as illustrated in FIG. 7E. In the (k+1)th table 780, the electronic device 101 may identify D4, which is a cumulative SAR value 781 at at least one past time point, D2, which is a maximum SAR value 782 at a current time point, and D5, which is a predicted SAR value 783 at at least one future time point. The electronic device 101 may identify whether a cumulative SAR value of D4 + D2 + D5 exceeds the Max cumulative SAR. In the (k+1)th table, the number of past time points 791 may be smaller by one than the number of past time points 771 in the kth table. In the (k+1)th table, the number of future time points 793 may be larger by one 794 than the number of one future time points 773 in the kth table.

According to various embodiments, in operation 603, the electronic device 101 may identify, for a plurality of tables corresponding to at least one future time point, a past cumulative SAR value and predicted SAR values at a current time point and at a future time point. The electronic device 101 may identify cumulative SAR values for a first table and a total of N-1 tables shifted by i time points (i is 1 or more and less than N-2) from the first table. In operation 605, the electronic device 101 may identify whether a table exists in which a sum of the cumulative SAR value and the predicted SAR value exceeds a threshold. When a table exceeding the threshold exists (605-Yes), in operation 607, the electronic device 101 may back off at least one MTPL corresponding to at least some RF signals (or at least some maximum transmission power limits (MTPL)). Those skilled in the art will understand that the back-off of MTPL herein may be replaced with a back-off of a maximum transmission power level or a back-off of transmission power. When no table exceeding the threshold exists (605-No), in operation 609, the electronic device 101 may transmit an RF signal with a transmission power configured

based on the MTPL. In various embodiments of the disclosure, the back-off of a maximum value of transmission power may indicate a back-off of the maximum value of transmission power.

As described above, the electronic device 101 may determine a maximum value of transmission power such that an average value of SAR used during a measurement time does not exceed an Average SAR limit. Alternatively, the electronic device 101 may determine a maximum value of transmission power such that cumulative SAR during the measurement time does not exceed a Max cumulative SAR. The electronic device 101 may determine a maximum value of maximum power for a next time interval every P time. For example, a condition for operating at normal max power during a next P time may be as follows.

Tx Room > SAR generated when operating at normal max power during the next P (normal max SAR in Table 1) + SAR generated when operating at backoff max power during (Remain Time - P) (backoff max SAR in Table 1) = P $\times$ normal max SAR + (Remain Time - P) $\times$ backoff max SAR     Condition:

In the condition, Tx Room may be a value obtained by subtracting a cumulative SAR up to a current time from Max cumulative SAR. In the condition, (Remain Time - P) may be T - average time - P, and may be, for example, a future time point described in FIGS. 7A to 7E. P may indicate a current time point. Average time may indicate a past time point. Satisfaction of the condition may indicate that, even if the electronic device 101 configures the maximum transmission power of normal max power during P time, there does not exist a table in which cumulative SAR exceeds Max cumulative SAR. Non-satisfaction of the condition may indicate that, if the electronic device 101 configures the maximum transmission power of normal max power during P time, there may exist a table in which cumulative SAR exceeds Max cumulative SAR, and in this case, the electronic device 101 may configure backoff max power as the maximum transmission power during P time.

Table 2 shows examples of variables and conditions.

[Table 2]

| [Example of variable configuration]<br>i. Normal MAX Power: 23 dBm<br>ii. Backoff MAX Power: 20 dBm<br>iii. Measurement Time (T): 100 seconds<br>iv. Measurement Period (P): 0.5 seconds<br>v. Number of SAR calculator tables: 199<br>vi. Average SAR LIMIT: 1.5 mW/g<br>vii. Max cumulative SAR: 150 mW/g<br>viii. Normal Max SAR $\Rightarrow$SAR at 23 dBm: 2 mW/g<br>ix. Backoff Max SAR $\Rightarrow$ SAR at 20 dBm: 1 mW/g |
|---|
| [Time point at which maximum power is switched from normal max power to backoff max power] Time point satisfying: Average time X normal max power + (100 - average time) X backoff max power $\leq$ Max cumulative SAR = Average time X 2 mW/g + (100 - average time) X 1 mW/g $\leq$ 150 mW/g <=> Average time $\leq$ 50 |

In the example of Table 2, it is described that continuous use of normal max power as a maximum transmission power for 50 seconds is possible, and that after 50 seconds, a backoff to the backoff max power is required. For example, it is assumed that an RF signal is transmitted at 23 dBm, which is the normal max power, for 50 seconds, that the RF signal is transmitted at 23 dBm, which is the normal max power, during the next P (0.5 seconds), and that the RF signal is transmitted at 20 dBm, which is the backoff max power, for 49.5 seconds (remain time - P). In this case, Tx Room may be 50 mW/g, which is obtained from 150 mW/g - 50 $\times$ 2 mW/g. SAR generated during the P time may be 1 mW/g, which is 2 mW/g $\times$ 0.5 seconds. SAR generated during (Remain time - P) may be 49.5 mW/g, which is 49.5 seconds $\times$ 1 mW/g. In this case, cumulative SAR during P and (Remain time - P) is 50.5 mW/g, which exceeds the Tx Room, and thus it may be identified that a backoff of the maximum value of transmission power at the P time point is required. The above example will be described with reference to FIG. 6B, which illustrates transmission power associated with one RAT. For example, referring to FIG. 6B, the electronic device 101 may configure an MTPL 611 during a first period to A. Meanwhile, as described with reference to FIGS. 7A to 7E, the electronic device 101 may identify that a backoff condition of the MTPL is satisfied. The electronic device 101 may configure an MTPL 612 during the first period to a backoff value B. As the MTPL 612 is backed off, transmission power may also decrease. As the transmission power decreases, an average RF exposure (or cumulative RF exposure) corresponding to the table may decrease. Accordingly, the electronic device 101 may restore an MTPL 613 during a third period to A. Accordingly, an average value of RF exposure during a predetermined period may

be maintained at or below a threshold average value 620 (for example, B). Meanwhile, as illustrated in FIG. 6C, transmission power 650 may be configured to a value less than or equal to MTPLs 611, 612, and 613. In order to change the transmission power 650 over time, a driving voltage (Vcc) applied to a capacitor (e.g., the capacitor 361 of FIG. 3A or the capacitor 361a of FIG. 3B) may need to be changed (e.g., the change described with reference to FIG. 5A). Accordingly, as described with reference to FIGS. 5A and 5B, audible noise may be generated, and thus an operation for reducing audible noise during the corresponding period (e.g., the first period and the third period) may need to be performed.

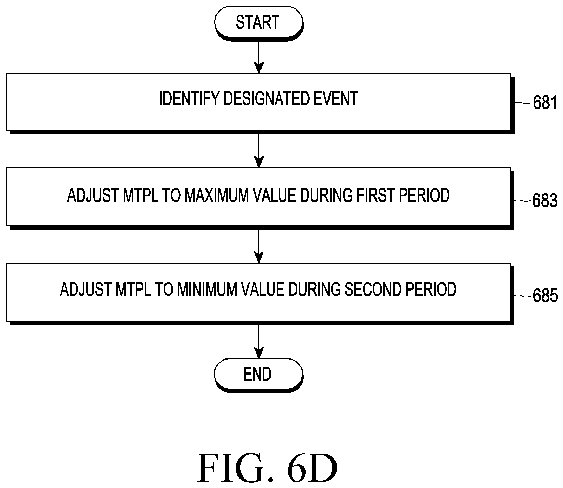

FIG. 6D is a flowchart illustrating a method of operating an electronic device according to an embodiment.

According to an embodiment, in operation 681, the electronic device 101 (e.g., the application processor 301 and/or the communication processor 310) may detect a designated event associated with a grip or proximity. The designated event may be, for example, an event configured to adjust an MTPL such that a cumulative value of transmission power of an RF signal during a predetermined time interval is less than or equal to a threshold cumulative value or an average value of the transmission power during the predetermined time interval is less than or equal to a threshold average value. The designated event may include a grip event and/or a proximity event, but is not limited thereto, and those skilled in the art will understand that any event requiring control of an amount of RF radiation incident to a user may be included.

In operation 683, the electronic device 101 may adjust the MTPL to a maximum value during a first period. In operation 685, the electronic device 101 may adjust the MTPL to a minimum value during a second period. For example, when an MTPL corresponding to a case in which the designated event occurs is equal to or greater than a designated threshold MTPL, the electronic device 101 may be configured to change the MTPL between the maximum value and the minimum value, but this is merely an example and is not limited thereto. For example, the electronic device 101 may configure the first period corresponding to the maximum value and the second period corresponding to the minimum value such that a cumulative value of transmission power of an RF signal during a predetermined time interval is less than or equal to a threshold cumulative value or an average value of the transmission power during the predetermined time interval is less than or equal to a threshold average value, but a method of configuring the first period and the second period is not limited thereto. For example, independently of a cumulative value of previously used transmission power (or a cumulative value of RF radiation), the electronic device 101 may configure the MTPL to the maximum value during the first period and configure the MTPL to the minimum value during the second period.

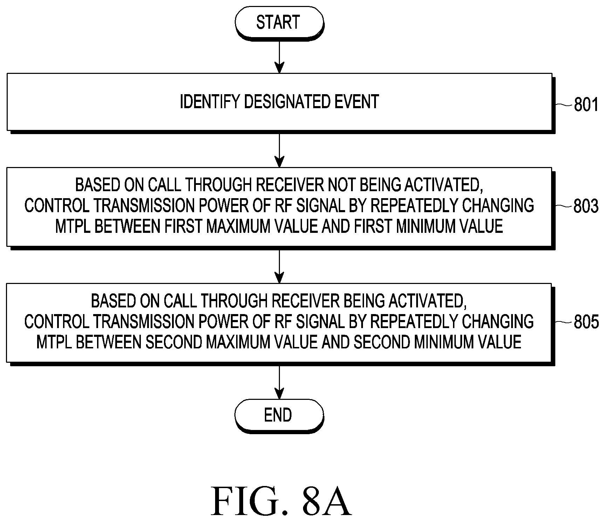

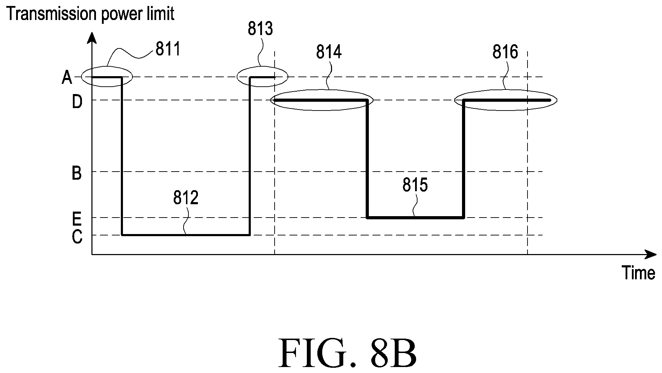

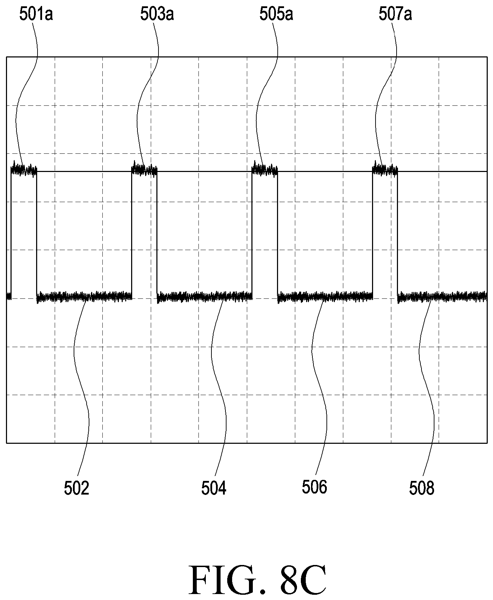

FIG. 8A is a flowchart illustrating a method of operating an electronic device according to an embodiment. The embodiment of FIG. 8A will be described with reference to FIGS. 8B and 8C. FIG. 8B illustrates MTPL according to an embodiment. FIG. 8C illustrates a driving voltage applied to a capacitor according to an embodiment.

According to an embodiment, in operation 801, the electronic device 101 (e.g., the application processor 301 and/or the communication processor 310) may identify a designated event. The designated event described above may be, for example, an event configured to adjust an MTPL such that a cumulative value of transmission power of an RF signal during a predetermined time interval is less than or equal to a threshold cumulative value or an average value of the transmission power during the predetermined time interval is less than or equal to a threshold average value. The designated event may include a grip event and/or a proximity event, but those skilled in the art will understand that the type thereof is not limited.

In operation 803, as illustrated in FIG. 8B, based on a phone call not being activated through a receiver, the electronic device 101 may control transmission power of an RF signal by repeatedly changing MTPLs 811, 812, 813 between a first maximum value (A) and a first minimum value (C) such that a cumulative value of transmission power of the RF signal during a predetermined time interval is less than or equal to a threshold cumulative value or an average value of the transmission power during the predetermined time interval is less than or equal to a threshold average value. Here, those skilled in the art will understand that the first minimum value (C) may also be referred to as, for example, a backoff value of the MTPL. For example, a first period in which the first maximum value (A) is configured and a second period in which the first minimum value (C) is configured may be configured such that the cumulative value of transmission power of the RF signal during the predetermined time interval is less than or equal to the threshold cumulative value or the average value of the transmission power during the predetermined time interval is less than or equal to the threshold average value, but the present disclosure is not limited thereto. Alternatively, those skilled in the art will understand that the electronic device 101 may be implemented to perform backoff based on a cumulative value of transmission power or RF radiation. For example, the communication processor 310 of the electronic device 101 may receive, from the application processor 301, information indicating that a call is being performed. The application processor 301 may provide, for example, a device status index (DSI) to the communication processor 310, and information indicating that a call is being performed may be represented by a specific value in a DSI format, but this is merely an example and the manner of representing information indicating that a call is being performed is not limited. For example, when a call is initiated, the application processor 301 may provide, to the communication processor 310, information indicating that the call has been initiated (or is in progress). The application processor 301 may be configured to provide, to the communication processor 310, information indicating that a call is being performed not only when the call has been initiated (or is in progress), but additionally when it is confirmed that the receiver 390 is in use (or may be expressed as being in operation or activated).

The communication processor 310 may identify that a call is not currently being performed by not receiving, from the application processor 301, information indicating that a call is being performed, or by receiving, from the application processor 301, information indicating that a call is not being performed. Alternatively, the communication processor 310 may identify whether a call is currently being performed without using information from the application processor 301. For example, the communication processor 310 may identify that a call is not being performed based on a data network name (DNN) of an activated packet data unit (PDU) session not being IMS, but this is merely an example. Alternatively, the communication processor 310 may directly, or through the application processor 301, identify whether the receiver 390 is in use, and may identify whether a call is being performed based thereon, and a manner of identifying the same is not limited. Since a call is not being performed (or although a call is in progress, voice is not output through the receiver 390), even if audible noise is generated, there is no problem in user usability. Accordingly, while a call is not being performed, the MTPL may be changed between the first maximum value (A) and the first minimum value (C). For example, the first maximum value (A) may be greater than a threshold average value (B), and the first minimum value (C) may be less than the threshold average value (B).

In operation 805, as illustrated in FIG. 8B, based on a call being activated through a receiver, the electronic device 101 may control transmission power of an RF signal by repeatedly changing MTPLs 814, 815, 816 between a second maximum value (D) and a second minimum value (E) such that a cumulative value of transmission power of the RF signal during a predetermined time interval is less than or equal to a threshold cumulative value or an average value of the transmission power during a predetermined time interval is less than or equal to a threshold average value. Here, those skilled in the art will understand that the second minimum value (E) may also be referred to as, for example, a backoff value of the MTPL. For example, a third period during which the second maximum value (D) is configured and a fourth period during which the second minimum value (E) is configured may be configured such that the cumulative value of transmission power of the RF signal during the predetermined time interval is less than or equal to the threshold cumulative value or the average value of the transmission power during the predetermined time interval is less than or equal to the threshold average value, but the present disclosure is not limited thereto. Alternatively, those skilled in the art will understand that the electronic device 101 may be implemented to perform backoff based on a cumulative value of transmission power or RF radiation. For example, the second maximum value (D) may be greater than the threshold average value (B), and the second minimum value (E) may be less than the threshold average value (B). For example, the second maximum value (D) may be less than the first maximum value (A), and the second minimum value (E) may be greater than the first minimum value (C). As the second maximum value (D) is less than the first maximum value (A), a magnitude of a driving voltage (Vcc) applied to a capacitor (e.g., the capacitor 361 of FIG. 3A or the capacitor 361a of FIG. 3B) during a period corresponding to the second maximum value (D) may be less than a magnitude of a driving voltage (Vcc) applied to the capacitor (e.g., the capacitor 361 of FIG. 3A or the capacitor 361a of FIG. 3B) during a period corresponding to the first maximum value (A). For example, a driving voltage (Vcc) 501a, 503a, 505a, 507a during a period corresponding to the second maximum value (D) in FIG. 8C may be less than a driving voltage (Vcc) 501, 503, 505, 507 during a period corresponding to the first maximum value (A) in FIG. 5B. Accordingly, a difference between the driving voltage (Vcc) 501a, 503a, 505a, 507a and a floating voltage during the period corresponding to the second maximum value (D) may be less than a difference between the driving voltage (Vcc) 501, 503, 505, 507 and the floating voltage during the period corresponding to the first maximum value (A). A magnitude of audible noise during the period corresponding to the second maximum value (D) may be less than a magnitude of audible noise during the period corresponding to the first maximum value (A). For example, a magnitude of the second maximum value (D) may be determined through experimentation, but a manner of determining the same is not limited. For example, Table 3 may show relationship information among the MTPL, the driving voltage (Vcc), and audible noise, which may be identified through experimentation, but is not limited thereto.

[Table 3]

| MTPL[dBm] | Driving voltage (Vcc)[V] | Magnitude of audible noise [dB] |
|---|---|---|
| 25 | 4.6 | -84.53 |
| 24 | 4.5 | -85.74 |
| 23 | 4.4 | -86.59 |
| 22 | 4.3 | -87.61 |
| 21 | 4.1 | -88.46 |
| 20 | 4 | -89.72 |
| 18 | 3.6 | -91.76 |
| 16 | 3.2 | -93.51 |

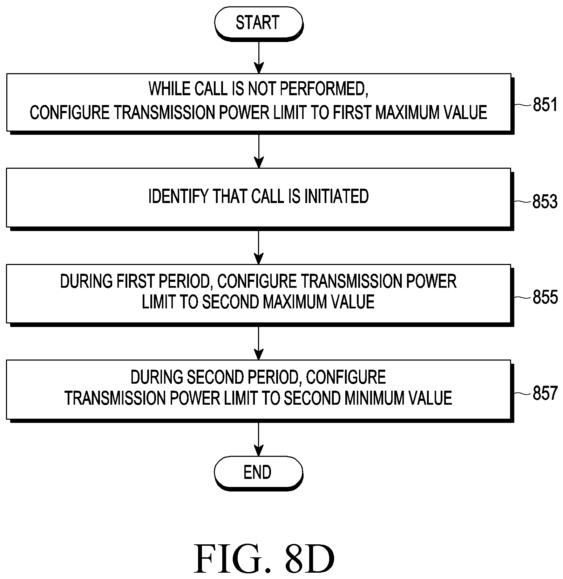

For example, the second maximum value (D) may be determined according to a policy on an allowable magnitude of audible noise. If audible noise of -86.59 dB is identified to be hardly audible to a user in practice, the second maximum value (D) may be configured, for example, to 23 dBm. As described above, the electronic device 101 may comply with regulations related to a cumulative value (or an average value) of RF exposure while reducing a magnitude of audible noise. FIG. 8D is a flowchart illustrating a method of operating an electronic device according to an embodiment.

According to an embodiment, in operation 851, the electronic device 101 (e.g., the application processor 301 and/or the communication processor 310) may configure the MTPL to the first maximum value (A) while a call is not being performed. As described above, the electronic device 101 may change the MTPL to the first minimum value (C) after a period corresponding to the first maximum value (A) has elapsed, or may change the MTPL to the first minimum value (C) based on a backoff condition being satisfied based on a cumulative value of transmission power and/or a cumulative value of RF radiation. In operation 853, the electronic device 101 may identify that a call using a receiver is activated. In operation 855, based on the call using the receiver being activated, the electronic device 101 may configure the MTPL to the second maximum value (D) during a first period. In operation 857, based on the call using the receiver being activated, the electronic device 101 may configure the MTPL to the second minimum value (E) during a second period. As described above, the electronic device 101 may change the MTPL to the second minimum value (E) after a period corresponding to the second maximum value (D) has elapsed, or may change the MTPL to the second minimum value (E) based on a backoff condition being satisfied based on a cumulative value of transmission power and/or a cumulative value of RF radiation.

In an example, as illustrated in FIG. 8B, a second minimum value (E) of the MTPL during a call using the receiver being activated may be greater than a first minimum value (C) of the MTPL during a call using the receiver not being activated. As the second maximum value (D) is less than the first maximum value (A), the second minimum value (E) may be configured to be greater than the first minimum value (C). Meanwhile, this is merely an example, and depending on implementation, the second minimum value (E) may be configured to be the same as the first minimum value (C). In this case, a period during which the second minimum value (E) is maintained may be shorter than a period during which the first minimum value (C) is maintained. Meanwhile, depending on implementation, the second minimum value (E) may be configured to be less than the first minimum value (C), but it is not limited thereto.

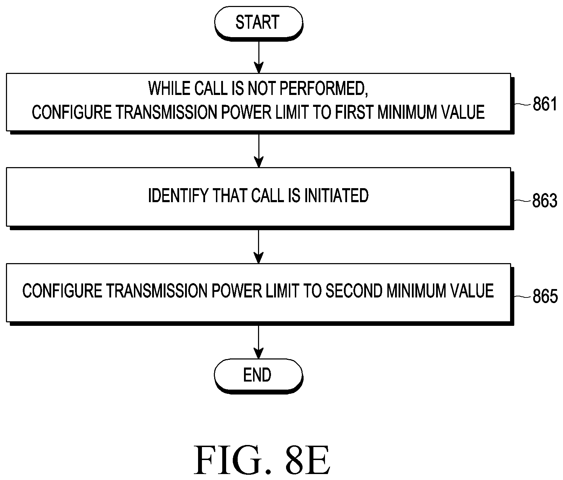

FIG. 8E is a flowchart illustrating a method of operating an electronic device according to an embodiment.

According to an embodiment, in operation 861, the electronic device 101 (e.g., the application processor 301 and/or the communication processor 310) may configure the MTPL to the first minimum value (C) while a call using the receiver is not being performed. As described above, the electronic device 101 may change the MTPL to the first minimum value (C) after a period corresponding to the first maximum value (A) has elapsed, or may change the MTPL to the first minimum value (C) based on a backoff condition being satisfied based on a cumulative value of transmission power and/or a cumulative value of RF radiation. Meanwhile, while the MTPL is configured to the first minimum value (C), the electronic device 101 may identify, in operation 863, that a call using the receiver has been initiated. In operation 865, the electronic device 101 may configure the MTPL to the second minimum value (E).

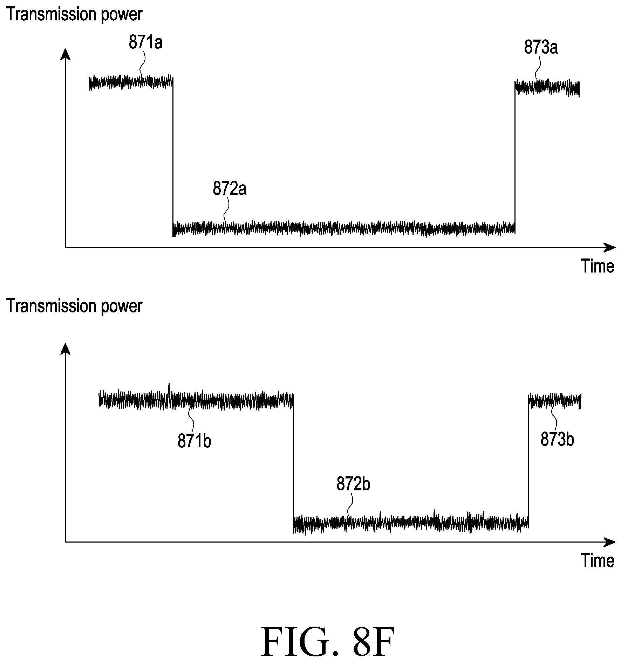

FIG. 8F illustrates comparison between a backoff period of transmission power while a call is not in progress and a backoff period during a call.

According to an embodiment, the electronic device 101 (e.g., the application processor 301 and/or the communication processor 310) may configure transmission power 871a during a first period while a call using the receiver is not in progress. The transmission power 871a during the first period may be configured to a value less than or equal to the MTPL while a call is not in progress. Meanwhile, the electronic device 101 may change the MTPL from a maximum value to a minimum value. Accordingly, the electronic device 101 may configure transmission power 872a during a second period to a value less than or equal to the minimum value of the MTPL. Meanwhile, the electronic device 101 may change the MTPL from the minimum value to the maximum value. Accordingly, the electronic device 101 may configure transmission power 873a during a third period to a value less than or equal to the maximum value of the MTPL.

Meanwhile, the electronic device 101 may configure transmission power 871b during a fourth period while a call is in progress. The transmission power 871b during the fourth period may be configured to a value less than or equal to a maximum value of the MTPL applied while a call using the receiver is in progress. For example, the MTPL while a call is in progress may be less than the MTPL while a call is not in progress, and the transmission power 871b during the fourth period while a call is in progress may be less than the transmission power 871a during the first period while a call is not in progress. Meanwhile, the electronic device 101 may change the MTPL from a maximum value of the MTPL applied while a call using the receiver is in progress to a minimum value of the MTPL applied while the call using the receiver is in progress. Accordingly, the electronic device 101 may configure transmission power 872b during a fifth period to a value less than or equal to the minimum value of the MTPL applied while the call using the receiver is in progress. Meanwhile, the electronic device 101 may change the MTPL from the minimum value of the MTPL applied while the call using the receiver is in progress to the maximum value of the MTPL applied while the call using the receiver is in progress. Accordingly, the electronic device 101 may configure transmission power 873b during a sixth period to a value less than or equal to the

maximum value of the MTPL applied while the call using the receiver is in progress.

In the embodiment of FIG. 8F, although the transmission power 871b during the fifth period while a call is in progress may be greater than the transmission power 871a during the second period while a call is not in progress, because the transmission power 871b during the fourth period while a call is in progress is less than the transmission power 871a during the first period while a call is not in progress, the fifth period, which is a backoff period while a call is in progress, may be shorter than the second period, which is a backoff period while a call is not in progress.

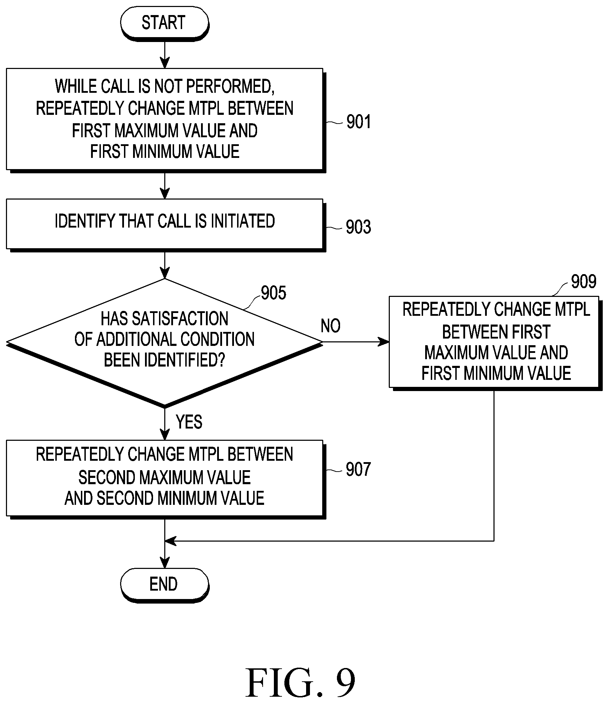

FIG. 9 is a flowchart illustrating a method of operating an electronic device according to an embodiment.

According to an embodiment, in operation 901, the electronic device 101 (e.g., the application processor 301 and/or the communication processor 310) may repeatedly change the MTPL between a first maximum value (A) and a first minimum value (C) while a call using the receiver is not in progress, as described above. In operation 903, the electronic device 101 may determine that a call using the receiver has been initiated. In operation 905, the electronic device 101 may identify whether an additional condition is satisfied. The additional condition may be configured based on, for example, an operating band, an MTPL prior to the call, communication quality, and/or a transmission RF path, but the type and/or number of parameters for configuring the additional condition is not limited thereto. A configuration of additional conditions for each parameter will be described later. When the additional condition is satisfied (operation 905 - Yes), in operation 907, the electronic device 101 may repeatedly change the MTPL between a second maximum value (D) and a second minimum value (E). When the additional condition is not satisfied (operation 905 - No), in operation 909, the electronic device 101 may repeatedly change the MTPL between the first maximum value (A) and the first minimum value (C). In an example, even if a call is initiated, a need to reduce the MTPL may be small when no audible noise occurs or when a magnitude of the audible noise is relatively small. For example, an additional condition for determining that no audible noise occurs or that the magnitude of the audible noise is relatively small may be configured, and when the additional condition is satisfied, the MTPL may be maintained. Alternatively, even when audible noise occurs, the importance of other parameters such as communication quality may be configured to be higher. For example, an additional condition related to a parameter having a higher priority than audible noise may be configured, and when the additional condition is satisfied, the MTPL may be maintained.

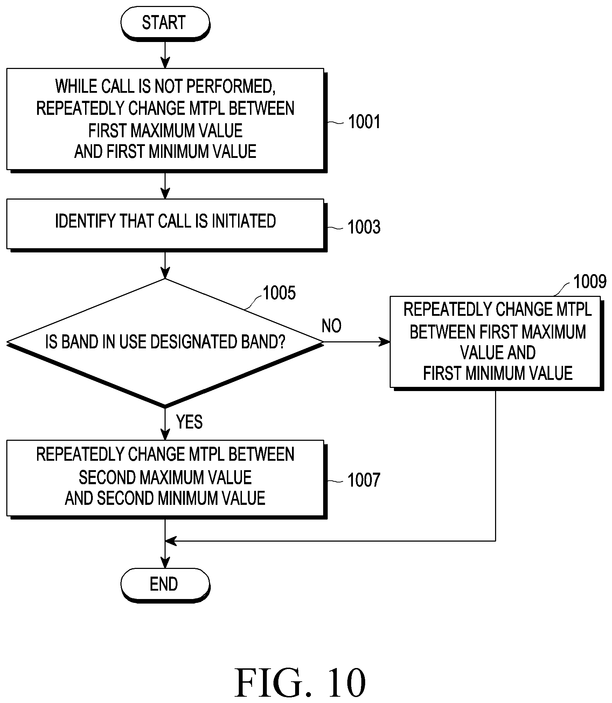

FIG. 10 is a flowchart illustrating a method of operating an electronic device according to an embodiment.

According to an embodiment, in operation 1001, the electronic device 101 (e.g., the application processor 301 and/or the communication processor 310) may repeatedly change the MTPL between a first maximum value (A) and a first minimum value (C) while a call using the receiver is not in progress. In operation 1003, the electronic device 101 may identify that a call has been initiated. In operation 1005, the electronic device 101 may identify whether an additional condition is satisfied by identifying whether a band used in association with the call is a designated band. For example, a magnitude of audible noise for each band may vary depending on a structural configuration of the electronic device 101, a placement of internal hardware, or the like. For example, in one model, a magnitude of audible noise in a B1 band may be relatively small, whereas in another model, a magnitude of audible noise in the B1 band may be relatively large. Accordingly, the electronic device 101 may perform MTPL adjustment to reduce the magnitude of audible noise for at least one preset band and may be configured to refrain from performing MTPL adjustment for other bands. When the used band is the designated band (operation 1005 - Yes), in operation 1007, the electronic device 101 may repeatedly change the MTPL between a second maximum value (D) and a second minimum value (E). When the used band is not the designated band (operation 1005 - No), in operation 1009, the electronic device 101 may repeatedly change the MTPL between the first maximum value (A) and the first minimum value (C). For example, the electronic device 101 may configure an MTPL value for each band. For example, during a call (or while the receiver is used), the electronic device 101 may configure a band-specific MTPL such that an MTPL of a B1 band is 23.3 dBm, an MTPL of a B7 band is 22.1 dBm, and an MTPL of an N78 band is 23.5 dBm, but this is merely an example. In another example, the electronic device 101 may configure an MTPL during a call by applying a rule such as reducing the MTPL during a non-call period by 2dB. The value of 2 dB is merely an example, and those skilled in the art will understand that the value may be identical for all bands (or parameters) or may be configured differently depending on a band (or parameter).

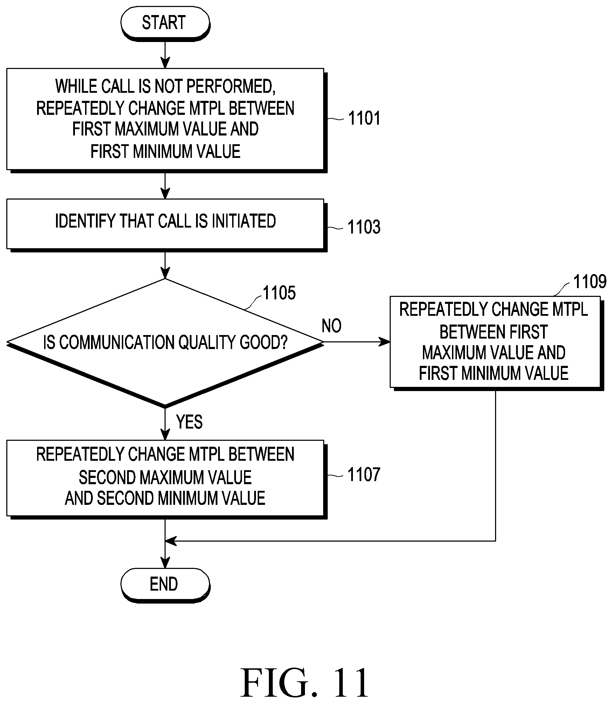

FIG. 11 is a flowchart illustrating a method of operating an electronic device according to an embodiment.

According to an embodiment, in operation 1101, the electronic device 101 (e.g., the application processor 301 and/or the communication processor 310) may repeatedly change the MTPL between a first maximum value (A) and a first minimum value (C) while a call using the receiver is not in progress. In operation 1103, the electronic device 101 may identify that a call using the receiver has been initiated. In operation 1105, the electronic device 101 may identify whether an additional condition is satisfied by identifying whether communication quality is good. For example, when communication quality is poor, if transmission power is reduced, this may cause problems more serious than audible noise, such as release of the communication connection, degradation of voice quality during a call, and/or interruption of voice reception during a call. In such a case, maintaining call quality may be more desirable than preventing occurrence of audible noise. Accordingly, the electronic device 101 may perform adjustment of the MTPL to reduce the magnitude of audible noise only when communication quality is good and may be configured to refrain from adjusting the MTPL when communication quality is poor. For example, the electronic device 101 may determine whether a condition indicating that

communication quality is good is satisfied using RX no data count (RNDC), reference signals received power (RSRP), reference signals received quality (RSRQ), received signal strength indicator (RSSI), signal to interference plus noise ratio (SINR), and/or block error rate (BLER), but the type and/or number of parameters for configuring the condition is not limited thereto. When communication quality is determined to be good (operation 1105 - Yes), in operation 1107, the electronic device 101 may repeatedly change the MTPL between a second maximum value (D) and a second minimum value (E). When communication quality is determined not to be good (operation 1105 - No), in operation 1109, the electronic device 101 may repeatedly change the MTPL between the first maximum value (A) and the first minimum value (C). For example, the electronic device 101 may configure an MTPL value according to the value of a parameter indicating communication quality. For example, the electronic device 101 may configure the MTPL according to the value of RSRP, but this is merely an example. In another example, the electronic device 101 may configure the MTPL during a call by applying a rule such as reducing the MTPL during a non-call period by 2dB. The value of 2 dB is merely an example, and those skilled in the art will understand that the value may be identical for all parameters indicating communication quality or may be configured differently depending on the value of a parameter indicating communication quality.

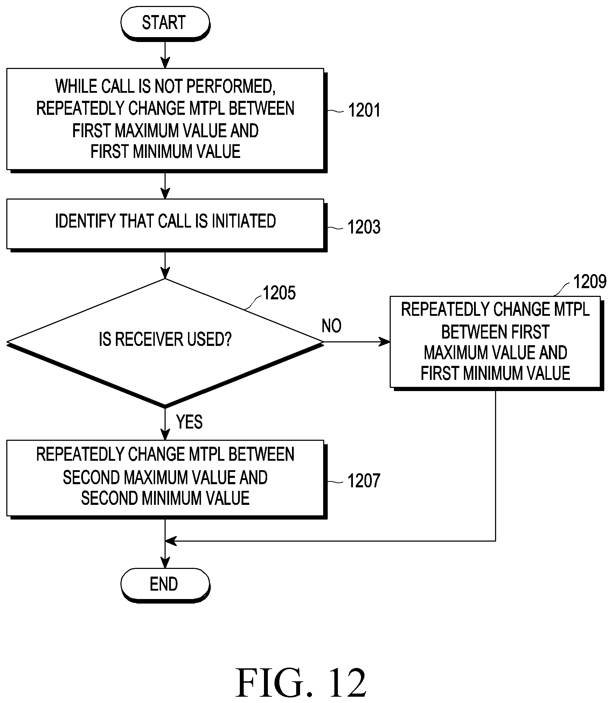

FIG. 12 is a flowchart illustrating a method of operating an electronic device according to an embodiment.

According to an embodiment, in operation 1201, the electronic device 101 (e.g., the application processor 301 and/or the communication processor 310) may repeatedly change the MTPL between a first maximum value (A) and a first minimum value (C) while a call is not in progress. In operation 1203, the electronic device 101 may identify that a call has been initiated. In operation 1205, the electronic device 101 may identify whether an additional condition is satisfied by identifying whether the receiver 390 is in use. For example, while voice is output through the receiver 390, audible noise may occur due to charging and discharging of a capacitor (e.g., the capacitor 361 of FIG. 3A or the capacitor 361a of FIG. 3B) located near the receiver 390. While voice is output through an external electronic device other than the receiver 390 (e.g., a wired earphone or a wireless earphone, but is not limited thereto), a likelihood of occurrence of audible noise may be relatively low, or a magnitude of the audible noise may be relatively small. Accordingly, the electronic device 101 may perform adjustment of the MTPL to reduce the magnitude of audible noise only when the receiver 390 is used and may be configured to refrain from adjusting the MTPL when the receiver 390 is not used. When it is determined that the receiver 390 is used (operation 1205 - Yes), in operation 1207, the electronic device 101 may repeatedly change the MTPL between a second maximum value (D) and a second minimum value (E). When it is determined that the receiver 390 is not used (operation 1205 - No), in operation 1209, the electronic device 101 may repeatedly change the MTPL between the first maximum value (A) and the first minimum value (C). Accordingly, even during a call, when the receiver 390 is not used, the MTPL may be maintained.

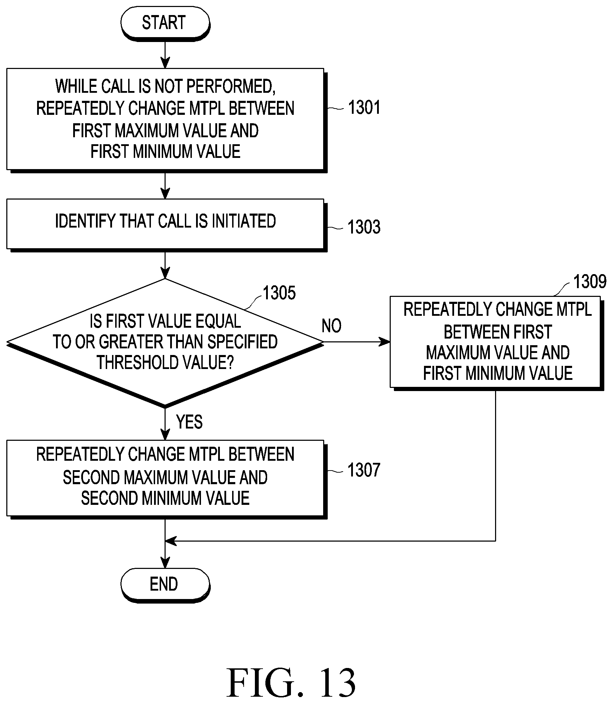

FIG. 13 is a flowchart illustrating a method of operating an electronic device according to an embodiment.

According to an embodiment, in operation 1301, the electronic device 101 (e.g., the application processor 301 and/or the communication processor 310) may repeatedly change the MTPL between a first maximum value (A) and a first minimum value (C) while a call using the receiver is not in progress. In operation 1303, the electronic device 101 may identify that a call using the receiver has been initiated. In operation 1305, the electronic device 101 may identify whether an additional condition is satisfied by identifying whether a first value, which is an MTPL during a non-call period, is equal to or greater than a threshold value. For example, when the MTPL is relatively low, the magnitude of audible noise may also be relatively low. In this case, it may be desirable not to adjust the MTPL. Accordingly, the electronic device 101 may perform adjustment of the MTPL to reduce the magnitude of audible noise only when the MTPL prior to initiation of the call is equal to or greater than the threshold value and may be configured to refrain from adjusting the MTPL when the MTPL prior to initiation of the call is less than the threshold value. When the first value, which is the MTPL prior to initiation of the call, is equal to or greater than the threshold value (operation 1305 - Yes), in operation 1307, the electronic device 101 may repeatedly change the MTPL between a second maximum value (D) and a second minimum value (E). When the first value, which is the MTPL prior to initiation of the call, is less than the threshold value (operation 1305 - No), in operation 1309, the electronic device 101 may repeatedly change the MTPL between the first maximum value (A) and the first minimum value (C). For example, the electronic device 101 may configure the MTPL during the call based on the MTPL prior to initiation of the call, but this is merely an example. For example, the electronic device 101 may configure the MTPL during the call by applying a rule such as reducing the MTPL during a non-call period by 2dB.

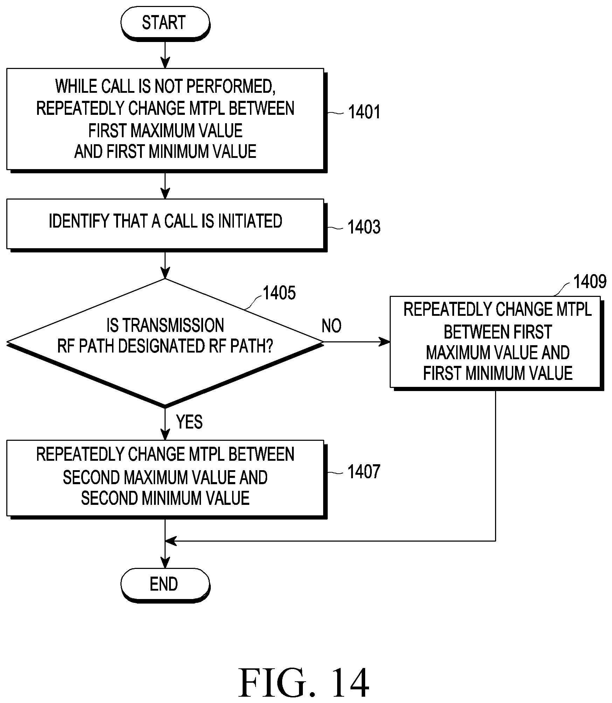

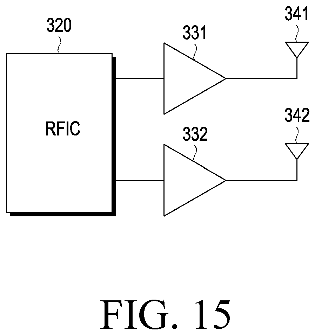

FIG. 14 is a flowchart illustrating a method of operating an electronic device according to an embodiment. The embodiment of FIG. 14 will be described with reference to the embodiment of FIG. 15. FIG. 15 illustrates antenna hopping according to an embodiment.

According to an embodiment, in operation 1401, the electronic device 101 (e.g., the application processor 301 and/or the communication processor 310) may repeatedly change the MTPL between a first maximum value (A) and a first minimum value (C) while a call using the receiver is not in progress. In operation 1403, the electronic device 101 may identify that a call using the receiver has been initiated. In operation 1405, the electronic device 101 may identify whether an additional condition is satisfied by identifying whether a transmission RF path is a designated RF path. For example, referring to FIG. 15, the electronic device 101 may include a plurality of PAs 331, 332 connected to the RFIC 320 and antennas 341, 342 corresponding to the plurality of PAs 331, 332, respectively. Here, the first PA 331 and the first antenna

341 may be referred to as a first transmission RF path, and the second PA 332 and the second antenna 342 may be referred to as a second transmission RF path. For example, a distance between the first PA 331 (or a capacitor associated with the first PA 331) and the receiver 390 may be relatively large, and a distance between the second PA 332 (or a capacitor associated with the second PA 332) and the receiver 390 may be relatively small. For example, when the first RF path is used, relatively large audible noise may occur due to vibration of a capacitor relatively close to the receiver 390, and the electronic device 101 may adjust the MTPL. When the second RF path is used, relatively small audible noise may occur due to vibration of a capacitor relatively far from the receiver 390, and the electronic device 101 may refrain from adjusting the MTPL for reducing a magnitude of the audible noise. When the transmission RF path is the designated RF path (operation 1405 - Yes), in operation 1407, the electronic device 101 may repeatedly change the MTPL between a second maximum value (D) and a second minimum value (E). For example, the second value may be smaller than the first value. When the transmission RF path is not the designated RF path (operation 1405 - No), in operation 1409, the electronic device 101 may repeatedly change the MTPL between the first maximum value (A) and the first minimum value (C). For example, the electronic device 101 may configure the MTPL during the call based on the transmission RF path, but this is merely an example. For example, the electronic device 101 may configure the MTPL during the call by applying a rule such as reducing the MTPL during a non-call period by 2dB. The value of 2 dB is merely an example, and those skilled in the art will understand that the value may be identical for all parameters indicating communication quality or may be configured differently depending on the transmission RF path.

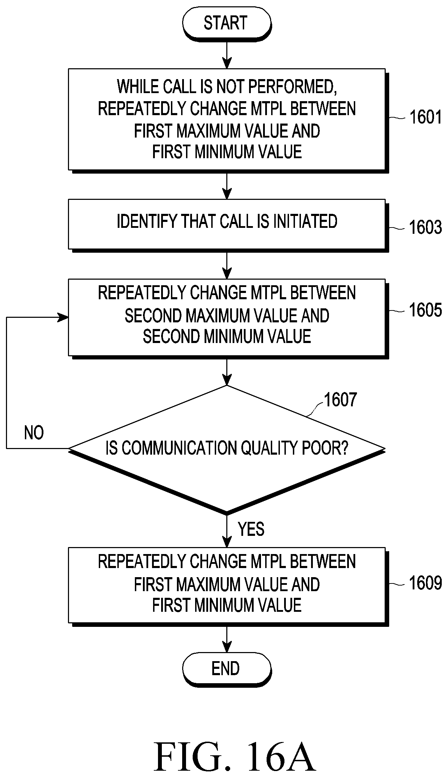

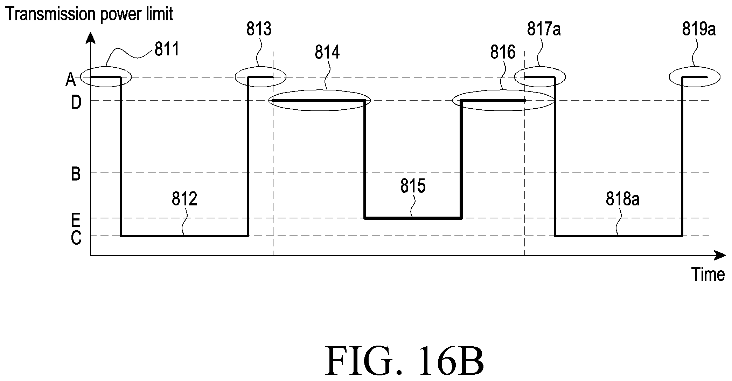

FIG. 16A is a flowchart illustrating a method of operating an electronic device according to an embodiment. The embodiment of FIG. 16A will be described with reference to FIG. 16B. FIG. 16B illustrates an MTPL according to an embodiment.

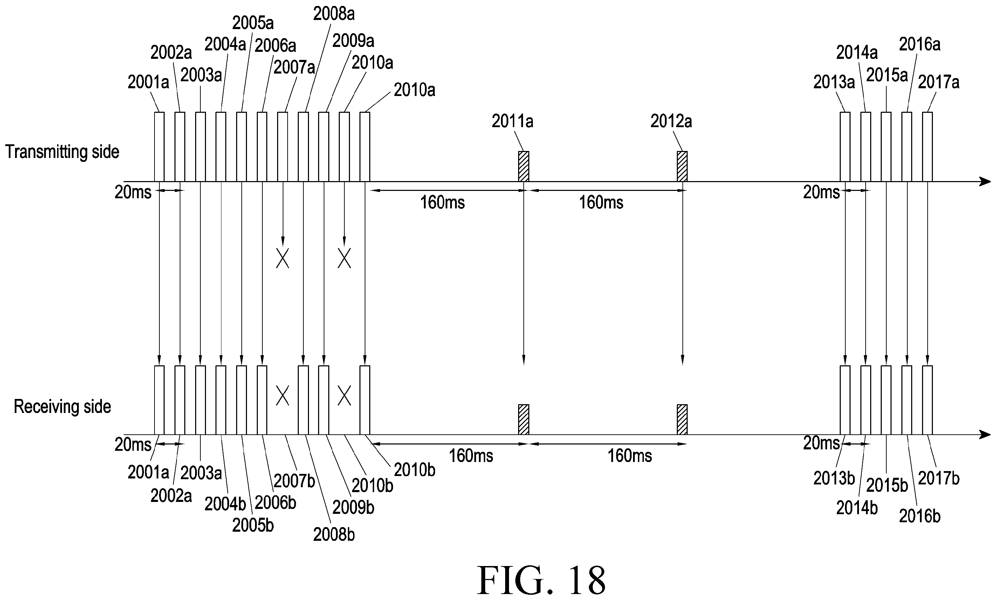

According to an embodiment, in operation 1601, the electronic device 101 (e.g., the application processor 301 and/or the communication processor 310) may repeatedly change the MTPL between a first maximum value (A) and a first minimum value (C) while a call using the receiver is not in progress. In operation 1603, the electronic device 101 may identify that a call using the receiver has been initiated. In operation 1605, the electronic device 101 may repeatedly change the MTPL between a second maximum value (D) and a second minimum value (E). In operation 1607, the electronic device 101 may identify whether communication quality associated with the call is poor. For example, as described above, the electronic device 101 may identify whether a condition for determining whether communication quality is poor is satisfied based on RNDC, RSRP, RSRQ, RSSI, SINR, and/or BLER, but the type and/or number of parameters for configuring the condition is not limited thereto. For example, when an RNDC value is equal to or greater than a designated threshold RNDC value, the electronic device 101 may determine that communication quality is poor. RNDC will be described with reference to FIG. 18. When it is identified that communication quality is not poor (operation 1607 - No), the electronic device 101 may repeatedly change the MTPL between the second maximum value (D) and the second minimum value (E). When it is identified that communication quality is poor (operation 1607 - Yes), in operation 1609, the electronic device 101 may repeatedly change the MTPL between the first maximum value (A) and the first minimum value (C). In this case, even though a call is in progress, the electronic device 101 may configure the MTPL to the first maximum value (A) because communication quality is poor. When the MTPL is configured to the first maximum value (A), a magnitude of audible noise may increase, but communication quality may be improved. As shown in FIG. 16B, the electronic device 101 may configure the MTPL 817a during a seventh period to the first maximum value (A). The electronic device 101 may configure the MTPL 818a during an eighth period to the first minimum value (C). Thereafter, the electronic device 101 may configure the MTPL 819a during a ninth period to the first maximum value (A). For example, the electronic device 101 may again identify whether communication quality is poor during the ninth period. When communication quality is still determined to be poor, the electronic device 101 may configure the MTPL 819a to the first maximum value (A). When it is identified that communication quality is not poor, the electronic device 101 may configure the MTPL 819a to the second maximum value (D).

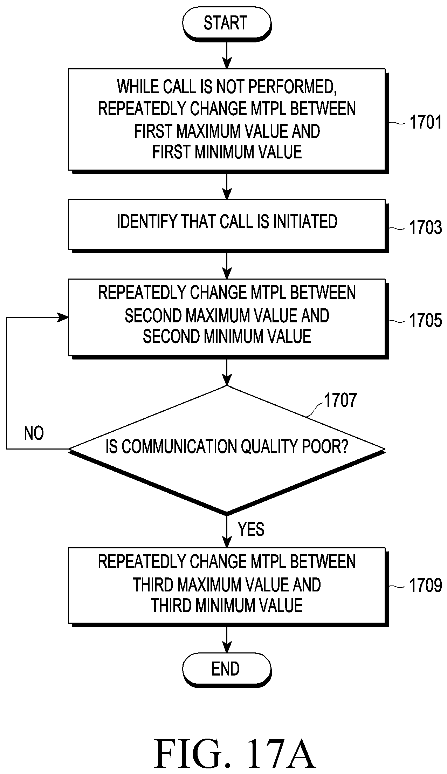

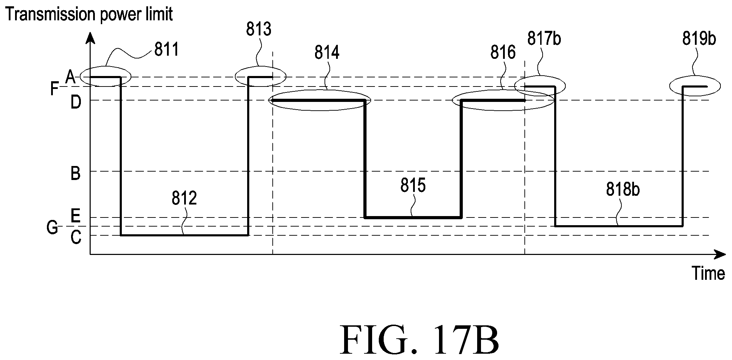

FIG. 17A is a flowchart illustrating a method of operating an electronic device according to an embodiment. The embodiment of FIG. 17A will be described with reference to FIG. 17B. FIG. 17B illustrates an MTPL according to an embodiment.

According to an embodiment, in operation 1701, the electronic device 101 (e.g., the application processor 301 and/or the communication processor 310) may repeatedly change the MTPL between a first maximum value (A0 and a first minimum value (C) while a call using the receiver is not in progress. In operation 1703, the electronic device 101 may identify that a call using the receiver has been initiated. In operation 1705, the electronic device 101 may repeatedly change the MTPL between a second maximum value (D) and a second minimum value (E). In operation 1707, the electronic device 101 may identify whether communication quality associated with the call is poor. When it is identified that communication quality is not poor (operation 1707 - No), the electronic device 101 may repeatedly change the MTPL between the second maximum value (D) and the second minimum value (E). When it is identified that communication quality is poor (operation 1707 - Yes), in operation 1709, the electronic device 101 may repeatedly change the MTPL between a third maximum value (F) and a third minimum value (G). For example, as shown in FIG. 17B, the third maximum value (F) may be smaller than the first maximum value (A) and greater than the second maximum value (D). However, this

is merely an example, and the third maximum value (F) may be greater than the first maximum value (A). As shown in FIG. 17B, the electronic device 101 may configure the MTPL 817b during a seventh period to the third maximum value (F). The electronic device 101 may configure the MTPL 818b during an eighth period to the third minimum value (G). Here, the third minimum value (G) has been described as a value between the first minimum value (C) and the second minimum value (E), but the value is not limited thereto. The electronic device 101 may configure the MTPL 819b during a ninth period to the third maximum value (F). For example, the electronic device 101 may again identify whether communication quality is poor during the ninth period. When communication quality is still determined to be poor, the electronic device 101 may configure the MTPL 819b to the third maximum value (F). When it is identified that communication quality is not poor, the electronic device 101 may set the MTPL 819b to the second maximum value (D).

For example, the electronic device 101 may again identify whether communication quality is poor, and when the communication quality is determined to still be poor, the electronic device 101 may additionally adjust the MTPL. For example, when communication quality is determined to still be poor, the electronic device 101 may additionally increase the MTPL. For example, those skilled in the art will understand that the electronic device 101 may adjust the MTPL to a value between the first maximum value (A) and the third maximum value (F), or to another value (e.g., the first maximum value (A) or a value exceeding the first maximum value (A)). When communication quality is determined not to be poor, the electronic device 101 may additionally decrease the MTPL. For example, those skilled in the art will understand that the electronic device 101 may adjust the MTPL to a value less than or equal to the third maximum value (F). The electronic device 101 may periodically determine whether to additionally adjust the MTPL.

FIG. 18 illustrates a process of identifying an RNDC according to an embodiment.

For example, the electronic device 101, which is a transmitting-side device, may transmit, during a call, transmission voice packets 2001a to 2017a corresponding to data corresponding to a user voice, and transmission silence insertion descriptor (SID) packets 2021a, 2022a indicating that the user voice is not present. A receiving-side device may receive, during the call, reception voice packets 2001b to 2006b, 2008b, 2009b, 2011b to 2017b corresponding to the transmission voice packets 2001a to 2006a, 2008a, 2009a, 2011a to 2017a transmitted by the transmitting-side device, and reception SID packets 2021b, 2022b corresponding to the transmission SID packets 2021a, 2022a. Meanwhile, when a communication environment is poor, reception voice packets corresponding to some transmission voice packets 2007a, 2010a may not be received by the receiving-side device. The receiving-side device may count the number indicating failures of reception, and the number may be referred to as an RNDC value. Meanwhile, as shown in FIG. 18, the RNDC value may not be counted when a single reception voice packet is not received, and the receiving-side device may count the RNDC value when N reception failures of reception voice packets occur (or during an M period) (e.g., when reception failures occur for 160ms). The receiving-side device may transmit the counted RNDC value to the electronic device 101, which is the transmitting-side device. The electronic device 101 may determine whether communication quality is good based on the RNDC value, and/or determine whether to increase the MTPL that was decreased when the call was initiated. Meanwhile, instead of the RNDC value, an RNDC ratio may be transmitted to the electronic device 101, which is the transmitting-side device. The RNDC ratio may be calculated as the number of unsuccessfully received packets relative to the total number of packets, but the calculation method is not limited thereto.

According to an embodiment, the electronic device 101 may include memory 130 configured to store one or more instructions. The electronic device 101 may include a processor 120; 212, 214; 260; 301, 310. The one or more instructions may cause the electronic device 101, when executed by the processor 120; 212, 214; 260; 301, 310

According to an embodiment, an electronic device 101 may include one or more processors 120; 212, 214; 260; 301, 310. The electronic device 101 may include memory configured to store instructions. The one or more instructions, when executed individually or collectively by the at least one processor 120; 212, 214; 260; 301, 310, may cause the electronic device 101, to detect a designated event associated with proximity or grip of a user. The one or more instructions, when executed individually or collectively by the at least one processor 120; 212, 214; 260; 301, 310, may cause the electronic device 101 to, in case that a call is not activated through the receiver 390 of the electronic device 101, control transmission power of an RF signal based on detection of the designated event by repeatedly changing a value of a maximum transmission power level (MTPL) between a first maximum value and a first minimum value such that an average value of transmission power of the RF signal during a predetermined time interval is less than or equal to a threshold value. The one or more instructions, when executed individually or collectively by the at least one processor 120; 212, 214; 260; 301, 310, may cause the electronic device 101 to, in case that a call is activated through the receiver 390 of the electronic device 101, control transmission power of an RF signal during a call through the receiver 390 by repeatedly changing a value of the MTPL between a second maximum value smaller than the first maximum value and a second minimum value such that an average value of the transmission power of the RF signal during the predetermined time interval is less than or equal to the threshold value. The first maximum value and the second maximum value may be greater than the threshold value, and the first minimum value and the second minimum value may be smaller than the threshold value.

According to an embodiment, in the electronic device, the first minimum value may be smaller than the second minimum value.

According to an embodiment, the first minimum value may be equal to the second minimum value.

According to an embodiment, the electronic device 101 may include a power amplifier 330 configured to amplify the RF signal. The electronic device 101 may include a PMIC 350 configured to provide a driving voltage (Vcc) of the power amplifier 330. The electronic device 101 may include a capacitor 361 configured to charge and/or discharge the driving voltage (Vcc). The instructions, when executed, may cause the electronic device 101 to control the PMIC 350 to provide a first driving voltage (Vcc) corresponding to the first maximum value and a second driving voltage (Vcc) corresponding to the first minimum value as the value of the MTPL between the first maximum value and the first minimum value. The instructions, when executed, may cause the electronic device 101 to control the PMIC 350 to provide a third driving voltage (Vcc) corresponding to the second maximum value and a fourth driving voltage (Vcc) corresponding to the second minimum value as the value of the MTPL is changed between the second maximum value and the second minimum value. The first driving voltage may be greater than the third driving voltage.

According to an embodiment, the instructions, when executed, may cause the electronic device 101 to, as at least a part of an operation of repeatedly changing the value of the MTPL between the second maximum value and the second minimum value, repeatedly change the value of the MTPL between the second maximum value and the second minimum value based on identifying that at least one additional condition is satisfied.

According to an embodiment, the at least one additional condition may include a condition that a band configured for transmission of the RF signal is one band among at least one designated bands.

According to an embodiment, the at least one additional condition may be a condition that at least one indicator associated with communication quality for the call indicates that the quality is good.

According to an embodiment, the at least one additional condition may be a condition that the first maximum value is equal to or greater than a designated threshold value.

According to an embodiment, the instructions, when executed, may cause the electronic device 101 to, while a value of the MTPL is changed between the second maximum value and the second minimum value, identify whether the at least one indicator associated with communication quality for the call satisfies a condition indicating that the quality is poor.

According to an embodiment, the one or more instructions, when executed, may cause the electronic device 101, based on at least one indicator associated with the quality satisfying a condition indicating that the quality is poor, to change the value of the MTPL between the first maximum value and the first minimum value or between a third maximum value and a third minimum value during a call through the receiver. The third maximum value may be a value between the first maximum value and the second maximum value, and/or the third minimum value may be a value between the first minimum value and the second minimum value.

According to an embodiment, the condition indicating that the quality is poor may be configured based on the number of times that data for the call is not received by a receiving-side device of the call, the number serving as at least one indicator.

According to an embodiment, the condition indicating that the quality is poor may be associated with at least one parameter associated with quality of reception strength, the at least one parameter serving as at least one indicator.

According to an embodiment, the second maximum value may be configured based on communication quality for the call.

According to an embodiment, the second maximum value may be configured based on the first maximum value.

According to an embodiment, in computer-readable storage medium storing instructions, the instructions, when executed by a processor 120; 212, 214; 260; 301, 310 of an electronic device 101, may cause the electronic device 101 to perform at least one operation. The at least one operation may include detecting a designated event associated with proximity or grip of a user. The at least one operation may include, when a call is not activated through a receiver 390 of the electronic device 101, controlling transmission power of an RF signal based on detection of the designated event by repeatedly changing a value of a maximum transmission power level (MTPL) between a first maximum value and a first minimum value such that an average value of the transmission power of the RF signal during a predetermined time interval is less than or equal to a threshold value. The at least one operation may include, when the call is activated through the receiver 390 of the electronic device 101, controlling transmission power of an RF signal during a call through the receiver 390 by repeatedly changing the value of the MTPL between a second maximum value smaller than the first maximum value and a second minimum value such that an average value of the transmission power of the RF signal during the predetermined time interval is less than or equal to the threshold value. The first maximum value and the second maximum value may be greater than the threshold value, and the first minimum value and the second minimum value may be smaller than the threshold value.

According to an embodiment, in the electronic device, the first minimum value may be smaller than the second minimum value.

According to an embodiment, the first minimum value may be equal to the second minimum value.

According to an embodiment, the at least one operation may include providing a first driving voltage (Vcc) corresponding to the first maximum value and a second driving voltage (Vcc) corresponding to the first minimum value as the value of the MTPL is changed between the first maximum value and the first minimum value. The at least one operation

may include providing a third driving voltage (Vcc) corresponding to the second maximum value and a fourth driving voltage (Vcc) corresponding to the second minimum value as the value of the MTPL is changed between the second maximum value and the second minimum value. The first driving voltage may be greater than the third driving voltage.

According to an embodiment, the repeatedly changing of the value of the MTPL between the second maximum value and the second minimum value may include repeatedly changing the value of the MTPL between the second maximum value and the second minimum value based on identifying that at least one additional condition is satisfied.

According to an embodiment, the at least one additional condition may be a condition that a band configured for transmission of the RF signal is one band among at least one designated bands.

According to an embodiment, the at least one additional condition may be a condition that at least one indicator associated with communication quality for the call indicates that the quality is good.

According to an embodiment, the at least one additional condition may be a condition that the first maximum value is equal to or greater than a designated threshold value.

According to an embodiment, the at least one operation may include, while the value of the MTPL is changed between the second maximum value and the second minimum value, identifying whether at least one indicator associated with communication quality for the call satisfies a condition indicating that the quality is poor.

According to an embodiment, the at least one operation may include, based on at least one indicator associated with the quality satisfying a condition indicating that the quality is poor, changing the value of the MTPL between the first maximum value and the first minimum value or between a third maximum value and a third minimum value during a call through the receiver. The third maximum value may be a value between the first maximum value and the second maximum value, and/or the third minimum value may be a value between the first minimum value and the second minimum value.

According to an embodiment, the condition indicating that the quality is poor may be configured based on the number of times that data for the call is not received by a receiving-side device of the call, the number serving as at least one indicator.

According to an embodiment, the condition indicating that the quality is poor may be associated with at least one parameter associated with quality of reception strength, the at least one parameter serving as at least one indicator.

According to an embodiment, the second maximum value may be configured based on communication quality for the call.

According to an embodiment, the second maximum value may be configured based on the first maximum value.

According to an embodiment, a method of operating an electronic device 101 may include detecting a designated event associated with proximity or grip of a user. The method of operating the electronic device 101 may include, when a call is not activated through a receiver 390 of the electronic device 101, controlling transmission power of an RF signal based on detection of the designated event by repeatedly changing a value of an MTPL (maximum transmission power level) between a first maximum value and a first minimum value such that an average value of transmission power of the RF signal during a predetermined time interval is less than or equal to a threshold value. The method of operating the electronic device 101 may include, when the call is activated through the receiver 390 of the electronic device 101, controlling the transmission power of the RF signal during a call through the receiver 390 by repeatedly changing the value of the MTPL between a second maximum value smaller than the first maximum value and a second minimum value such that the average value of the transmission power of the RF signal during the predetermined time interval is less than or equal to than the threshold value. The first maximum value and the second maximum value may be greater than the threshold value, and the first minimum value and the second minimum value may be smaller than the threshold value.

According to an embodiment, the electronic device 101 may include one or more processors 120; 212, 214; 260; 301, 310. The electronic device 101 may include memory configured to store instructions. The one or more instructions, when executed individually or collectively by the at least one processor 120; 212, 214; 260; 301, 310, may cause the electronic device 101 to identify whether a first condition indicating that a call is being performed by the electronic device 101 is satisfied. The one or more instructions, when executed individually or collectively by the at least one processor 120; 212, 214; 260; 301, 310, may cause the electronic device 101 to identify whether a second condition indicating satisfaction of a back-off condition for the MTPL is satisfied. The one or more instructions, when executed individually or collectively by the at least one processor 120; 212, 214; 260; 301, 310, may cause the electronic device 101 to configure a value of the MTPL based on whether the first condition is satisfied and whether the second condition is satisfied.

According to an embodiment, in computer-readable storage medium storing instructions, the instructions, when executed by a processor 120; 212, 214; 260; 301, 310 of an electronic device 101, may cause the electronic device 101 to perform at least one operation. The at least one operation may include identifying whether a first condition indicating that a call is being performed by the electronic device 101 is satisfied. The at least one operation may include identifying whether a second condition indicating satisfaction of a back-off condition for the MTPL is satisfied. The at least one operation may include configuring a value of the MTPL based on whether the first condition is satisfied and whether the second condition is satisfied.

According to an embodiment, a method of operating the electronic device 101 may include identifying whether the first condition indicating that a call is being performed by the electronic device 101 is satisfied. The method of operating

the electronic device 101 may include identifying whether the second condition indicating satisfaction of a back-off condition for the MTPL is satisfied. The method of operating the electronic device 101 may include configuring a value of the MTPL based on whether the first condition is satisfied and whether the second condition is satisfied.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to embodiments, each component (e.g., a module or a program) of the above-described components may include a single entity or multiple entities, and some of the multiple entities may be separately disposed in different components. According to embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:

one or more processors (120; 212, 214; 260; 301, 310); and
memory (130) configured to store one or more instructions,
wherein the one or more instructions, when executed by the at least one processor (120; 212, 214; 260; 301, 310) individually or collectively, cause the electronic device (101) to:

detect a designated event associated with proximity or grip of a user;
in case that a call is not activated through a receiver (390) of the electronic device (101), control, based on detecting the designated event, transmission power of an RF signal by repeatedly changing a value of a maximum transmission power level (MTPL) between a first maximum value and a first minimum value such that an average value of the transmission power of the RF signal is less than or equal to a designated threshold value during a predetermined time interval; and
in case that a call is activated through the receiver (390) of the electronic device (101), control, during the call through the receiver (390), transmission power of an RF signal by repeatedly changing the value of the MTPL between a second maximum value smaller than the first maximum value and a second minimum value such that an average value of the transmission power of the RF signal is less than or equal to the designated threshold value during the predetermined time interval,
wherein the first maximum value and the second maximum value are greater than the designated threshold value, and
wherein the first minimum value and the second minimum value are smaller than the designated threshold value.

**2.** The electronic device of claim 1, wherein the first minimum value is smaller than the second minimum value.

**3.** The electronic device of claim 1, wherein the first minimum value is equal to the second minimum value.

**4.** The electronic device (101) of one of claims 1 to 3, further comprising:

a power amplifier (330) configured to amplify the RF signal;
a PMIC (350) configured to provide a driving voltage (Vcc) to the power amplifier (330); and
a capacitor (361) configured to charge and/or discharge the driving voltage (Vcc),
wherein the instructions, when executed, cause the electronic device (101) to:

as the value of the MTPL is changed between the first maximum value and the first minimum value, control the PMIC (350) to provide a first driving voltage (Vcc) corresponding to the first maximum value and a second driving voltage (Vcc) corresponding to the first minimum value; and
as the value of the MTPL is changed between the second maximum value and the second minimum value, control the PMIC (350) to provide a third driving voltage (Vcc) corresponding to the second maximum value and a fourth driving voltage (Vcc) corresponding to the second minimum value, and
wherein the first driving voltage is greater than the third driving voltage.

**5.** The electronic device (101) of one of claims 1 to 4, wherein the instructions, when executed, cause the electronic device (101) to, as at least a part of an operation of repeatedly changing the value of the MTPL between the second maximum value and the second minimum value, repeatedly change the value of the MTPL between the second maximum value and the second minimum value, based on identifying that at least one additional condition is satisfied.

**6.** The electronic device (101) of one of claims 1 to 5, wherein the at least one additional condition comprises a condition in which a band configured for transmission of the RF signal is one of at least one designated band.

**7.** The electronic device (101) of one of claims 1 to 6, wherein the at least one additional condition comprises a condition in which at least one indicator associated with communication quality for the call indicates that the quality is good.

**8.** The electronic device (101) of one of claims 1 to 7, wherein the at least one additional condition comprises a condition in which the first maximum value is equal to or greater than the designated threshold value.

**9.** The electronic device (101) of one of claims 1 to 8, wherein the instructions, when executed, cause the electronic device (101) to, while the value of the MTPL is changed between the second maximum value and the second minimum value, identify whether the at least one indicator associated with communication quality for the call satisfies a condition indicating that the quality is poor.

**10.** The electronic device (101) of one of claims 1 to 9, wherein the one or more instructions, when executed, cause the electronic device (101) to,

based on the at least one indicator associated with the quality satisfying a condition indicating that the quality is poor,
change the value of the MTPL between the first maximum value and the first minimum value or between a third maximum value and a third minimum value during the call through the receiver, and
wherein the third maximum value is a value between the first maximum value and the second maximum value, and/or the third minimum value is a value between the first minimum value and the second minimum value.

**11.** The electronic device (101) of one of claims 1 to 10, wherein the condition indicating that the quality is poor is configured based on, as the at least one indicator, a number of times when data for the call is not received by a receiving-side device of the call.

**12.** The electronic device (101) of one of claims 1 to 11, wherein the condition indicating that the quality is poor is associated with, as the at least one indicator, at least one parameter related to reception strength quality.

**13.** The electronic device (101) of one of claims 1 to 12, wherein the second maximum value is configured based on communication quality for the call.

**14.** The electronic device (101) of one of claims 1 to 13, wherein the second maximum value is configured based on the first maximum value.

**15.** A non-transitory computer-readable storage medium storing instructions that, when executed by a processor (120; 212, 214; 260; 301, 310) of an electronic device (101), cause the electronic device (101) to perform at least one operation,
wherein the at least one operation comprises:

detecting a designated event associated with proximity or grip of a user;
in case that a call is not activated through a receiver (390) of the electronic device (101), controlling, based on detecting the designated event, transmission power of an RF signal by repeatedly changing a value of a maximum transmission power level (MTPL) between a first maximum value and a first minimum value such that an average value of the transmission power of the RF signal is less than or equal to a designated threshold value during a predetermined time interval; and
in case that a call is activated through the receiver (390) of the electronic device (101), controlling, during the call through the receiver (390), transmission power of an RF signal by repeatedly changing the value of the MTPL between a second maximum value smaller than the first maximum value and a second minimum value such that an average value of the transmission power of the RF signal is less than or equal to the designated threshold value during the predetermined time interval,
wherein the first maximum value and the second maximum value are greater than the designated threshold value, and
wherein the first minimum value and the second minimum value are smaller than the designated threshold value.

100
ELECTRONIC DEVICE 101
130
MEMORY
132
VOLATILE MEMORY
134
NON-VOLATILE MEMORY
INTERNAL MEMORY
136
EXTERNAL MEMORY
138
140
PROGRAM
146
APPLICATION
144
MIDDLEWARE
142
OPERATING SYSTEM
150
INPUT MODULE
155
SOUND OUTPUT MODULE
160
DISPLAY MODULE
189
BATTERY
120
PROCESSOR
121
MAIN PROCESSOR
123
AUXILIARY PROCESSOR
188
POWER MANAGEMENT MODULE
190
COMMUNICATION MODULE
192
WIRELESS COMMUNICATION MODULE
194
WIRED COMMUNICATION MODULE
196
SUBSCRIBER IDENTIFICATION MODULE
197
ANTENNA MODULE
170
AUDIO MODULE
176
SENSOR MODULE
177
INTERFACE
178
CONNECTING TERMINAL
179
HAPTIC MODULE
180
CAMERA MODULE
199
SECOND NETWORK
104
ELECTRONIC DEVICE
FIRST NETWORK
198
102
ELECTRONIC DEVICE
108
SERVER

FIG. 1

200
101
ELECTRONIC DEVICE
192
WIRELESS COMMUNICATION MODULE
212
FIRST COMMUNICATION PROCESSOR
222
FIRST RFIC
232
FIRST RFFE
FIRST ANTENNA MODULE
242
120
PROCESSOR
213
224
SECOND RFIC
234
SECOND RFFE
SECOND ANTENNA MODULE
244
130
MEMORY
214
SECOND COMMUNICATION PROCESSOR
228
FOURTH RFIC
246
THIRD ANTENNA MODULE
226
THIRD RFIC
236
THIRD RFFE
238
PHASE SHIFTER
248
199
SECOND NETWORK
292
FIRST CELLULAR NETWORK
294
SECOND CELLULAR NETWORK

FIG. 2A

200
101
ELECTRONIC DEVICE
192
WIRELESS COMMUNICATION MODULE
260
INTEGRATED COMMUNICATION PROCESSOR
222
FIRST RFIC
232
FIRST RFFE
FIRST ANTENNA MODULE
242
224
SECOND RFIC
234
SECOND RFFE
SECOND ANTENNA MODULE
244
120
PROCESSOR
130
MEMORY
228
FOURTH RFIC
246
THIRD ANTENNA MODULE
226
THIRD RFIC
236
THIRD RFFE
238
PHASE SHIFTER
248
199
SECOND NETWORK
292
FIRST CELLULAR NETWORK
294
SECOND CELLULAR NETWORK


FIG. 2B

301
310
320
340
330
390
Receiver
Application processor
Communication processor
RFIC
361
350
PMIC

FIG. 3A

350a
First converter
362a
361a
330a
350b
380
First linear amplifier
381
362b
350c
362c
Second linear amplifier
330b
362d
330c
350d
362e
Second converter

FIG. 3B

V
401
t

FIG. 4A

V
402
t

FIG. 4B

V
403
t

FIG. 4C

501
503
505
507
502
504
506
508

FIG. 5A

513a
512a
511a
513b
512b
511b

FIG. 5B

START
CALL PLURALITY OF TABLES FOR TRANSMISSION POWER CORRESPONDING TO PLURALITY OF TIME POINTS
601
FOR PLURALITY OF TABLES, IDENTIFY PAST SAR CUMULATIVE VALUE AND PREDICTED SAR VALUES AT CURRENT TIME POINT AND FUTURE TIME POINT
603
605
DOES TABLE EXIST IN WHICH SUM OF SAR CUMULATIVE VALUE AND PREDICTED SAR VALUE EXCEEDS THRESHOLD CUMULATIVE VALUE?
NO
609
TRANSMIT COMMUNICATION SIGNAL USING CONFIGURED TRANSMISSION POWER
YES
BACK OFF LIMIT OF TRANSMISSION POWER OF AT LEAST PORTION OF COMMUNICATION SIGNALS
607
END

FIG. 6A

Transmission power limit
611
613
612
620
A
B
C
Time

FIG. 6B

Transmission power limit
611
Occurrence of audible noise
613
612
620
A
B
C
650
Time

FIG. 6C

START
IDENTIFY DESIGNATED EVENT
681
ADJUST MTPL TO MAXIMUM VALUE DURING FIRST PERIOD
683
ADJUST MTPL TO MINIMUM VALUE DURING SECOND PERIOD
685
END

FIG. 6D

Power dBm
Time
751
701
702
703
704
705
706
707
708
709
710
711
712
713
714
715
716
717
718
719
720
721
722
723
724
725
726
727
728
729
730
731
732
733
734
735
736
737
738
739
740
741
742
743
744
745
746
747
748
749

FIG. 7A

Power dBm
Time
752
701
702
703
704
705
706
707
708
709
710
711
712
713
714
715
716
717
718
719
720
721
722
723
724
725
726
727
728
729
730
731
732
733
734
735
736
737
738
739
740
741
742
743
744
745
746
747
748
749

FIG. 7B

Power dBm
Time
753
701
702
703
704
705
706
707
708
709
710
711
712
713
714
715
716
717
718
719
720
721
722
723
724
725
726
727
728
729
730
731
732
733
734
735
736
737
738
739
770
771
772
773
744
745
746
747
748
749

FIG. 7C

761
762
763
760
Past
Current
Future
kth table
D1
D2
D3
→ D1+D2+D3 > Th ?
SAR
S1
...
S2
Time
771
772
773

FIG. 7D

780
781
782
783
(k+1)th table
Past
Current
Future
D4
D2
D5
→ D4+D2+D5 > Th ?
SAR
S1
S2
794
Time
791
792
793

FIG. 7E

START
IDENTIFY DESIGNATED EVENT
801
BASED ON CALL THROUGH RECEIVER NOT BEING ACTIVATED, CONTROL TRANSMISSION POWER OF RF SIGNAL BY REPEATEDLY CHANGING MTPL BETWEEN FIRST MAXIMUM VALUE AND FIRST MINIMUM VALUE
803
BASED ON CALL THROUGH RECEIVER BEING ACTIVATED, CONTROL TRANSMISSION POWER OF RF SIGNAL BY REPEATEDLY CHANGING MTPL BETWEEN SECOND MAXIMUM VALUE AND SECOND MINIMUM VALUE
805
END

FIG. 8A

Transmission power limit
811
813
814
816
A
D
B
812
815
E
C
Time

FIG. 8B

501a
503a
505a
507a
502
504
506
508

FIG. 8C

START
WHILE CALL IS NOT PERFORMED,
CONFIGURE TRANSMISSION POWER LIMIT TO FIRST MAXIMUM VALUE
851
IDENTIFY THAT CALL IS INITIATED
853
DURING FIRST PERIOD, CONFIGURE TRANSMISSION POWER
LIMIT TO SECOND MAXIMUM VALUE
855
DURING SECOND PERIOD, CONFIGURE
TRANSMISSION POWER LIMIT TO SECOND MINIMUM VALUE
857
END

FIG. 8D

START
WHILE CALL IS NOT PERFORMED,
CONFIGURE TRANSMISSION POWER LIMIT TO FIRST MINIMUM VALUE
861
IDENTIFY THAT CALL IS INITIATED
863
CONFIGURE TRANSMISSION POWER LIMIT TO SECOND MINIMUM VALUE
865
END

FIG. 8E

Transmission power
871a
873a
872a
Time

Transmission power
871b
873b
872b
Time

FIG. 8F

START
WHILE CALL IS NOT PERFORMED, REPEATEDLY CHANGE MTPL BETWEEN FIRST MAXIMUM VALUE AND FIRST MINIMUM VALUE
901
IDENTIFY THAT CALL IS INITIATED
903
905
HAS SATISFACTION OF ADDITIONAL CONDITION BEEN IDENTIFIED?
NO
909
REPEATEDLY CHANGE MTPL BETWEEN FIRST MAXIMUM VALUE AND FIRST MINIMUM VALUE
YES
REPEATEDLY CHANGE MTPL BETWEEN SECOND MAXIMUM VALUE AND SECOND MINIMUM VALUE
907
END

FIG. 9

START
WHILE CALL IS NOT PERFORMED, REPEATEDLY CHANGE MTPL BETWEEN FIRST MAXIMUM VALUE AND FIRST MINIMUM VALUE
1001
IDENTIFY THAT CALL IS INITIATED
1003
1005
IS BAND IN USE DESIGNATED BAND?
NO
1009
REPEATEDLY CHANGE MTPL BETWEEN FIRST MAXIMUM VALUE AND FIRST MINIMUM VALUE
YES
REPEATEDLY CHANGE MTPL BETWEEN SECOND MAXIMUM VALUE AND SECOND MINIMUM VALUE
1007
END

FIG. 10

START
WHILE CALL IS NOT PERFORMED, REPEATEDLY CHANGE MTPL BETWEEN FIRST MAXIMUM VALUE AND FIRST MINIMUM VALUE
1101
IDENTIFY THAT CALL IS INITIATED
1103
1105
IS COMMUNICATION QUALITY GOOD?
NO
1109
REPEATEDLY CHANGE MTPL BETWEEN FIRST MAXIMUM VALUE AND FIRST MINIMUM VALUE
YES
REPEATEDLY CHANGE MTPL BETWEEN SECOND MAXIMUM VALUE AND SECOND MINIMUM VALUE
1107
END

FIG. 11

START
WHILE CALL IS NOT PERFORMED, REPEATEDLY CHANGE MTPL BETWEEN FIRST MAXIMUM VALUE AND FIRST MINIMUM VALUE
1201
IDENTIFY THAT CALL IS INITIATED
1203
IS RECEIVER USED?
1205
NO
REPEATEDLY CHANGE MTPL BETWEEN FIRST MAXIMUM VALUE AND FIRST MINIMUM VALUE
1209
YES
REPEATEDLY CHANGE MTPL BETWEEN SECOND MAXIMUM VALUE AND SECOND MINIMUM VALUE
1207
END

FIG. 12

START
WHILE CALL IS NOT PERFORMED, REPEATEDLY CHANGE MTPL BETWEEN FIRST MAXIMUM VALUE AND FIRST MINIMUM VALUE
1301
IDENTIFY THAT CALL IS INITIATED
1303
IS FIRST VALUE EQUAL TO OR GREATER THAN SPECIFIED THRESHOLD VALUE?
1305
NO
REPEATEDLY CHANGE MTPL BETWEEN FIRST MAXIMUM VALUE AND FIRST MINIMUM VALUE
1309
YES
REPEATEDLY CHANGE MTPL BETWEEN SECOND MAXIMUM VALUE AND SECOND MINIMUM VALUE
1307
END

FIG. 13

START
WHILE CALL IS NOT PERFORMED, REPEATEDLY CHANGE MTPL BETWEEN FIRST MAXIMUM VALUE AND FIRST MINIMUM VALUE
1401
IDENTIFY THAT A CALL IS INITIATED
1403
1405
IS TRANSMISSION RF PATH DESIGNATED RF PATH?
NO
1409
REPEATEDLY CHANGE MTPL BETWEEN FIRST MAXIMUM VALUE AND FIRST MINIMUM VALUE
YES
REPEATEDLY CHANGE MTPL BETWEEN SECOND MAXIMUM VALUE AND SECOND MINIMUM VALUE
1407
END

FIG. 14

320
RFIC
331
332
341
342

FIG. 15

START
WHILE CALL IS NOT PERFORMED, REPEATEDLY CHANGE MTPL BETWEEN FIRST MAXIMUM VALUE AND FIRST MINIMUM VALUE
1601
IDENTIFY THAT CALL IS INITIATED
1603
REPEATEDLY CHANGE MTPL BETWEEN SECOND MAXIMUM VALUE AND SECOND MINIMUM VALUE
1605
1607
NO
IS COMMUNICATION QUALITY POOR?
YES
REPEATEDLY CHANGE MTPL BETWEEN FIRST MAXIMUM VALUE AND FIRST MINIMUM VALUE
1609
END

FIG. 16A

Transmission power limit
Time
A
D
B
E
C
811
812
813
814
815
816
817a
818a
819a

FIG. 16B

START
WHILE CALL IS NOT PERFORMED, REPEATEDLY CHANGE MTPL BETWEEN FIRST MAXIMUM VALUE AND FIRST MINIMUM VALUE
1701
IDENTIFY THAT CALL IS INITIATED
1703
REPEATEDLY CHANGE MTPL BETWEEN SECOND MAXIMUM VALUE AND SECOND MINIMUM VALUE
1705
1707
NO
IS COMMUNICATION QUALITY POOR?
YES
REPEATEDLY CHANGE MTPL BETWEEN THIRD MAXIMUM VALUE AND THIRD MINIMUM VALUE
1709
END

FIG. 17A

Transmission power limit
Time
A
F
D
B
E
G
C
811
812
813
814
815
816
817b
818b
819b

FIG. 17B

Transmitting side
Receiving side
20ms
160ms
160ms
20ms
20ms
160ms
160ms
20ms
2001a
2002a
2003a
2004a
2005a
2006a
2007a
2008a
2009a
2010a
2010a
2011a
2012a
2013a
2014a
2015a
2016a
2017a
2001a
2002a
2003a
2004b
2005b
2006b
2007b
2008b
2009b
2010b
2010b
2013b
2014b
2015b
2016b
2017b

FIG. 18

# INTERNATIONAL SEARCH REPORT

International application No.
**PCT/KR2024/016175**

**A. CLASSIFICATION OF SUBJECT MATTER**

**H04B 1/3827**(2015.01)i; **H04W 52/28**(2009.01)i; **H04W 52/36**(2009.01)i; **H04W 52/24**(2009.01)i

According to International Patent Classification (IPC) or to both national classification and IPC

**B. FIELDS SEARCHED**

Minimum documentation searched (classification system followed by classification symbols)

H04B 1/3827(2015.01); H03F 1/02(2006.01); H04B 1/04(2006.01); H04W 24/10(2009.01); H04W 52/14(2009.01); H04W 52/36(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: MTPL(maximum transmission power level), SAR(specific absorption rate), power, max, min, back off, average, threshold, quality, receiver, activate

**C. DOCUMENTS CONSIDERED TO BE RELEVANT**

| Category* | Citation of document, with indication, where appropriate, of the relevant passages | Relevant to claim No. |
|---|---|---|
| Y<br>A | KR 10-2023-0139267 A (SAMSUNG ELECTRONICS CO., LTD.) 05 October 2023 (2023-10-05)<br>See paragraphs [0012]-[0109]; and figures 1 and 7. | 1-4,14-15<br>5-13 |
| Y | KR 10-2023-0114150 A (SAMSUNG ELECTRONICS CO., LTD.) 01 August 2023 (2023-08-01)<br>See paragraph [0105]; and figure 12. | 1-4,14-15 |
| A | US 2023-0337151 A1 (APPLE INC.) 19 October 2023 (2023-10-19)<br>See paragraphs [0056]-[0067]; and figures 6-8. | 1-15 |
| A | KR 10-1847040 B1 (QUALCOMM INCORPORATED) 09 April 2018 (2018-04-09)<br>See paragraphs [0051]-[0096]; and figures 7-13. | 1-15 |
| A | KR 10-1565764 B1 (ALCATEL LUCENT) 05 November 2015 (2015-11-05)<br>See paragraphs [0098]-[0113]; and figures 3-5. | 1-15 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **22 January 2025** | **23 January 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208**<br>Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/016175**

| Patent document cited in search report | Publication date (day/month/year) | Patent family member(s) | Publication date (day/month/year) |
|---|---|---|---|
| KR 10-2023-0139267 A | 05 October 2023 | US 2023-0309023 A1 | 28 September 2023 |
| | | WO 2023-182680 A1 | 28 September 2023 |
| KR 10-2023-0114150 A | 01 August 2023 | CN 118591990 A | 03 September 2024 |
| | | EP 4468612 A1 | 27 November 2024 |
| | | US 2024-0381269 A1 | 14 November 2024 |
| | | WO 2023-140689 A1 | 27 July 2023 |
| US 2023-0337151 A1 | 19 October 2023 | None | |
| KR 10-1847040 B1 | 09 April 2018 | CN 105850193 A | 10 August 2016 |
| | | CN 105850193 B | 21 May 2019 |
| | | EP 3087787 A1 | 02 November 2016 |
| | | EP 3087787 B1 | 25 October 2017 |
| | | JP 2017-500815 A | 05 January 2017 |
| | | JP 6362706 B2 | 25 July 2018 |
| | | KR 10-2016-0103051 A | 31 August 2016 |
| | | US 2015-0189600 A1 | 02 July 2015 |
| | | US 9491709 B2 | 08 November 2016 |
| | | WO 2015-100226 A1 | 02 July 2015 |
| KR 10-1565764 B1 | 05 November 2015 | CN 103339994 A | 02 October 2013 |
| | | CN 103339994 B | 23 November 2016 |
| | | EP 2636259 A2 | 11 September 2013 |
| | | EP 2636259 B1 | 04 January 2017 |
| | | JP 2013-546258 A | 26 December 2013 |
| | | JP 5731662 B2 | 10 June 2015 |
| | | KR 10-2013-0085422 A | 29 July 2013 |
| | | US 2012-0127933 A1 | 24 May 2012 |
| | | US 9055544 B2 | 09 June 2015 |
| | | WO 2012-061358 A2 | 10 May 2012 |
| | | WO 2012-061358 A3 | 02 August 2012 |

Form PCT/ISA/210 (patent family annex) (July 2022)